# EUROPEAN PATENT SPECIFICATION

(11) **EP 2 557 012 B1**
(45) Date of publication and mention of the grant of the patent: **18.03.2020**
(21) Application number: 11822855.0
(22) Date of filing: 02.06.2011
(51) Int. Cl.: B60W 30/182, B60W 40/08, B60W 40/09, B60W 50/06, B60W 50/10

(54) **CONTROL DEVICE FOR A VEHICLE**
STEUERVORRICHTUNG FÜR EIN FAHRZEUG
DISPOSITIF DE COMMANDE POUR UN VÉHICULE

(43) Date of publication of application: 13.02.2013
(73) Proprietor: TOYOTA JIDOSHA KABUSHIKI KAISHA, Toyota-shi, Aichi-ken, 471-8571 (JP)
(72) Inventor: OTSUBO, Masaaki, Toyota-shi, Aichi-ken, 471-8571 (JP)
(74) Representative: D Young & Co LLP
(86) International application number: PCT/JP2011/062690
(87) International publication number: WO 2012/164717

(56) References cited:
- EP-A1- 1 065 413
- EP-A1- 1 780 090
- WO-A1-2010/074590
- FR-A1- 2 796 893
- GB-A- 2 285 876
- JP-A- 10 011 106
- JP-A- 2003 081 040
- JP-A- 2003 336 739
- JP-A- 2006 097 862
- JP-A- 2010 013 061
- US-A- 6 102 002

## Description

### Technical Field

The present invention relates to a control device for a vehicle equipped with a manual transmission operated by a driver to select shift stages, and in particular, relates to a measure for obtaining a traveling state of the vehicle that accords with a driving inclination and the like of the driver.

### Background Art

Conventionally, in vehicle manual transmissions as disclosed in, for example, patent document 1 and patent document 2, shift stages are selected through manipulation of a shift lever by a driver.

For example, in a floorshift-type manual transmission, where the shift lever is disposed on the floor of the passenger compartment of a vehicle, the shift lever is movably operatably disposed in a shift gate having gate grooves formed and extended in the left and right directions (vehicle width direction: hereinafter occasionally referred to as select manipulation directions) and in the longitudinal directions (vehicle body longitudinal direction: hereinafter occasionally referred to as shift manipulation directions). After a select manipulation in which the shift lever is operated in a select manipulation direction along the gate groove, a shift manipulation is carried out in which the shift lever is operated in one direction of the shift manipulation directions, thereby establishing a desired shift stage in the transmission mechanism of the manual transmission. With the shift stage in established state, an engagement operation of a clutch device (depressing release manipulation of a clutch pedal) is carried out to engage the clutch device, thereby establishing a link between the engine and the transmission mechanism. The engine revolution is shifted based on the shift ratio of the established shift stage, and the rotational driving force is output from the transmission mechanism to the driving wheels.

### Related Art Documents

### Patent Documents

Patent document 1: Japanese Unexamined Patent Application Publication No. 2008-157184.
Patent document 2: Japanese Unexamined Patent Application Publication No. 2009-103268.
FR 2 796 893 A1 discloses an autoadaptive control system for a propulsion unit of a motor vehicle to provide adaptation of control of engine and transmission to different driving styles.

### Summary of Invention

### Problems to be Solved by the Invention

Incidentally, vehicles equipped with manual transmissions of the above-described kind are advantageous in their efficient fuel consumption rates over vehicles equipped with automatic transmissions. (For example, since there is no loss of driving force associated with torque converters, the fuel consumption rates are more efficient by the degree equivalent to the elimination of loss of driving force). This creates a need for enhanced marketability of the vehicles equipped with manual transmissions. In the manual transmissions and the like, which enable direct transmission of the force of drivers' shift lever operation and the force of drivers' clutch manipulation as described above, there is a need for an enhanced sense of integrity between the driver and the vehicle with vehicle control that accords with the operations of the driver.

In view of above circumstances, the inventors turned their attention to the possibility that the marketability of the vehicles of the above-described kind can be enhanced by realizing traveling states of the vehicles that accord with driving inclinations and the like of the driver. The inventors conducted a study for technology to realize such traveling states.

The present invention has been achieved in view of the above circumstances, and it is an object of the present invention to provide a control device for a vehicle, the control device realizing a traveling state of the vehicle that accords with a driving inclination and the like of the driver.

### Means of Solving the Problems

### -Principle of Solution to the Problems-

As the principle of solution of the present invention to achieve the above-described object, driver-associated conditions such as a driving inclination of a driver is recognized based on information (information on manipulation speeds and the like) obtained from the shift manipulation and the clutch manipulation of the driver when the driver selects a shift stage of the manual transmission, and vehicle control (including control of a drive source and control of vehicle behavior) is carried out in accordance with the driving inclination and the like.

### -Solution Means-

The above objects are achieved by a control device for a vehicle according to claim 1, including a manual transmission and/or a clutch device. The manual transmission is configured to select one of a plurality of shift stages through a shift manipulation of a driver. The clutch device is configured to engage and detach the manual transmission with and from a drive source through a clutch manipulation of the driver. The control device includes control means for determining a driving inclination of the driver, a level of driving skill of the driver, or a degree of fatigue of the driver based on manipulation information that is variable in accordance with at least one of the shift manipulation and the clutch manipulation of the driver, and for controllably adjusting an amount of control with respect to a control target of the vehicle in accordance with the determined driving inclination, the determined level of driving skill, or the determined degree of fatigue.

With this particular feature, when, for example, the shift manipulation is at a high speed or when the clutch manipulation is at a high speed, this situation is determined as a demand from the driver that the vehicle control be high in responsiveness with respect to driving manipulation (for example, the depressing manipulation of the accelerator). Conversely, when, for example, the shift manipulation is at a low speed or when the clutch manipulation is at a low speed, this situation is determined as a demand from the driver that the vehicle control be low in responsiveness with respect to driving manipulation. The amount of control with respect to a control target of the vehicle is determined in accordance with the result of determination as to a driving inclination. Specifically, when the driver demands that the vehicle control be high in responsiveness with respect to driving manipulation, the amount of control is adjusted to increase the responsiveness of the vehicle control by, for example, setting a high level of vehicle acceleration, which accords with the depressing manipulation of the accelerator. Conversely, when the driver demands that the vehicle control be low in responsiveness with respect to driving manipulation, the amount of control is adjusted to reduce the responsiveness of the vehicle control by, for example, setting a low level of vehicle acceleration, which accords with the depressing manipulation of the accelerator. The adjustment of amount of control with respect to a control target of the vehicle in the above-described manner realizes a traveling state of the vehicle that accords with a driving inclination of the driver, and enhances the marketability of the vehicle of this kind.

Instead of a driving inclination, the speed of the shift manipulation or the speed of the clutch manipulation may be used to determine the level of driving skill of the driver or the degree of fatigue of the driver. For example, when the shift manipulation is at a high speed or when the clutch manipulation is at a high speed, this situation is determined as a high level of driving skill of the driver or as a low degree of fatigue of the driver. Conversely, when, for example, the shift manipulation is at a low speed or when the clutch manipulation is at a low speed, this situation is determined as a low level of driving skill of the driver or as a high degree of fatigue of the driver. Similarly to the above-described case, this kind of result of determination may be used to adjust the amount of control with respect to a control target of the vehicle. For example, when the level of driving skill of the driver is determined as high or when the degree of fatigue of the driver is determined as low, the amount of control is adjusted to increase the responsiveness of the vehicle control by, for example, setting a high level of vehicle acceleration, which accords with the depressing manipulation of the accelerator. Conversely, when the level of driving skill of the driver is determined as low or when the degree of fatigue of the driver is determined as high, the amount of control is adjusted to reduce the responsiveness of the vehicle control by, for example, setting a low level of vehicle acceleration, which accords with the depressing manipulation of the accelerator.

Specific examples of the method for determining a driving inclination of the driver, the level of driving skill of the driver, or the degree of fatigue of the driver include:
- Rate of change per unit time in revolution of an input shaft of the manual transmission;
- Revolution of the input shaft of the manual transmission;
- Manipulation movement amount per unit time of a shift lever operated by the driver;
- Shift stage selected through the shift manipulation;
- Switching period of time of the shift stage in the shift manipulation;
- Magnitude of a shift load;
- Clutch torque associated with the clutch manipulation;
- Change in speed at a clutch stroke position associated with the clutch manipulation; and
- Period of time before a clutch stroke reaches a predetermined amount in the clutch manipulation.

In these determination methods, examples of the determination that high responsiveness of vehicle control is in demand with respect to driving manipulation include: the case where the rate of change per unit time in revolution of the input shaft of the manual transmission is higher than a predetermined value; the case where the revolution of the input shaft is higher than a predetermined value relative to a vehicle speed; the case where the manipulation movement amount per unit time of the shift lever operated by the driver is higher than a predetermined value; the case where the shift stage selected through the shift manipulation is a predetermined low shift stage relative to a vehicle speed; the case where the switching period of time of the shift stage in the shift manipulation is shorter than a predetermined period of time; the case where the magnitude of the shift load is higher than a predetermined value; the case where the clutch torque associated with the clutch manipulation is higher than a predetermined value relative to an engine torque; the case where the change in speed at the clutch stroke position in the clutch manipulation is higher than a predetermined value; and the case where the period of time before the clutch stroke associated with the clutch manipulation reaches a predetermined amount is shorter than a predetermined value.

Examples of the determination that low responsiveness of the vehicle control is in demand with respect to driving manipulation include: the case where the rate of change per unit time in revolution of the input shaft of the manual transmission is lower than a predetermined value; the case where the revolution of the input shaft is lower than a predetermined value relative to a vehicle speed; the case where the manipulation movement amount per unit time of the shift lever operated by the driver is lower than a predetermined value; the case where the shift stage selected through the shift manipulation is a predetermined high shift stage relative to a vehicle speed; the case where the switching period of time of the shift stage in the shift manipulation is longer than a predetermined period of time; the case where the magnitude of the shift load is lower than a predetermined value; the case where the clutch torque associated with the clutch manipulation is lower than a predetermined value relative to an engine torque; the case where the change in speed at the clutch stroke position in the clutch manipulation is lower than a predetermined value; and the case where the period of time before the clutch stroke associated with the clutch manipulation reaches a predetermined amount is longer than a predetermined value.

The determination methods may be carried out individually or in combination. This ensures accurate determination of a driving inclination of a driver using detection signals from existing sensors (such a revolution sensor of the input shaft of the manual transmission, a shift position sensor, a shift load sensor, an engine revolution sensor, and a clutch stroke sensor).

The control of adjusting the amount of control with respect to a control target of the vehicle in accordance with the determined driving inclination or the like is, specifically, by means of adjusting an annealing ratio of the control with respect to the control target of the vehicle. When a determination is made that high responsiveness of the vehicle control is in demand with respect to driving manipulation, the annealing ratio of the control is set at a low level. When a determination is made that low responsiveness of the vehicle control is in demand with respect to driving manipulation, the annealing ratio of control is set at a high level.

More specific examples of the control target of the vehicle include:
- Opening degree property of a throttle valve relative to a depressing amount of an accelerator by the driver;
- Opening degree property of the throttle valve at the time of tip-in through manipulation of the accelerator by the driver;
- Opening degree property of the throttle valve at the time of tip-out through manipulation of the accelerator by the driver;
- Property of a generated torque at the time of fuel cut in an internal combustion engine serving as a travel drive source of the vehicle;
- Property of a generated torque after release of fuel cut in the internal combustion engine serving as a travel drive source of the vehicle;
- Intervention timing of VDIM control; and
- Damping force of an air suspension disposed in a suspension device of the vehicle.

Here are specific examples of the amount of control with respect to the control target. When a determination is made that high responsiveness of the vehicle control is in demand with respect to driving manipulation, at least one of the following operations is carried out: increasing the opening degree of the throttle valve relative to the depressing amount of the accelerator by the driver; increasing the rate of change of the opening degree of the throttle valve at the time of tip-in associated with manipulation of the accelerator by the driver; increasing the rate of change per unit time of the opening degree of the throttle valve at the time of tip-out associated with manipulation of the accelerator by the driver; increasing the reduction amount per unit time of the generated torque at the time of fuel cut in the internal combustion engine serving as a travel drive source of the vehicle; increasing the increase amount per unit time of the generated torque after the release of fuel cut in the internal combustion engine serving as a travel drive source of the vehicle; delaying the intervention timing of the VDIM control; and increasing the damping force of the air suspension disposed in a suspension device of the vehicle.

In contrast, when a determination is made that low responsiveness of the vehicle control is in demand with respect to driving manipulation, at least one of the following operations is carried out: decreasing the opening degree of the throttle valve relative to the depressing amount of the accelerator by the driver; decreasing the rate of change of the opening degree of the throttle valve at the time of tip-in associated with manipulation of the accelerator by the driver; decreasing the rate of change per unit time of the opening degree of the throttle valve at the time of tip-out associated with manipulation of the accelerator by the driver; decreasing the reduction amount per unit time of the generated torque at the time of fuel cut in the internal combustion engine serving as a travel drive source of the vehicle; decreasing the increase amount per unit time of the generated torque after the release of fuel cut in the internal combustion engine serving as a travel drive source of the vehicle; advancing the intervention timing of the VDIM control; and decreasing the damping force of the air suspension disposed in the suspension device of the vehicle.

The adjustments of the control amount with respect to a control target of the vehicle realize a traveling state of the vehicle that accords with a driving inclination of the driver, the level of driving skill of the driver, or the degree of fatigue of the driver.

### Effects of the Invention

According to the teaching of the present invention, a driving inclination and the like of a driver are recognized based on information obtained from the shift manipulation and the clutch manipulation of the driver, and vehicle control is carried out in accordance with the driving inclination and the like. This realizes traveling states of vehicles that accord with driving inclinations and the like of drivers, and enhances the marketability of vehicles equipped with manual transmissions.

Particular aspects of the invention are set out in the appended claims.

### Brief Description of the Drawings

[FIG. 1] FIG. 1 is a diagram illustrating a schematic configuration of a power train mounted in a vehicle according to an embodiment of the present invention.
[FIG. 2] FIG. 2 is a diagram illustrating a configuration of an engine and an intake/exhaust system for the engine.
[FIG. 3] FIG. 3 is a diagram illustrating a schematic configuration of a clutch device.
[FIG. 4] FIG. 4 is a diagram schematically illustrating a shift pattern of a manual transmission having six shift stages.
[FIG. 5] FIG. 5 is a diagram illustrating a schematic configuration of an air suspension system.
[FIG. 6] FIG. 6 is a block diagram illustrating a configuration of a control system such as an engine ECU.
[FIG. 7] FIG. 7 is a graph illustrating three revolution changing states having different rates of change per unit time in revolution of an input shaft at the time of shift manipulation.
[FIG. 8] FIG. 8 shows an upper graph illustrating an exemplary change in input shaft revolution and engine revolution at the time of shift manipulation, and a lower graph illustrating an exemplary change in clutch torque at the time of shift manipulation.
[FIG. 9] FIG. 9 shows a throttle opening degree map to set changing properties of a throttle opening degree in accordance with an opening degree of an accelerator.
[FIG. 10] FIG. 10 is a timing chart illustrating changes in the opening degree of a throttle valve at the time of a tip-in property regulating operation.
[FIG. 11] FIG. 11 is a timing chart illustrating changes in the opening degree of the throttle valve at the time of a tip-out property regulating operation.
[FIG. 12] FIG. 12 is a timing chart illustrating changes in engine torque at the time of a fuel cut-on property regulating operation.
[FIG. 13] FIG. 13 is a timing chart illustrating changes in engine torque at the time of a fuel cut-off property regulating operation.
[FIG. 14] FIG. 14 is a VDIM intervention timing map to set an intervention timing of VDIM control in accordance with a driving inclination.
[FIG. 15] FIG. 15 is a flowchart of a procedure for control operation according to a first embodiment.
[FIG. 16] FIG. 16 is a flowchart of a procedure for control operation according to a second embodiment.

### Modes for Carrying out the Invention

Embodiments of the present invention will be described below by referring to the drawings. In the embodiments, description will be given with regard to a case where the present invention is applied to an FR-type (front engine rear drive) vehicle.

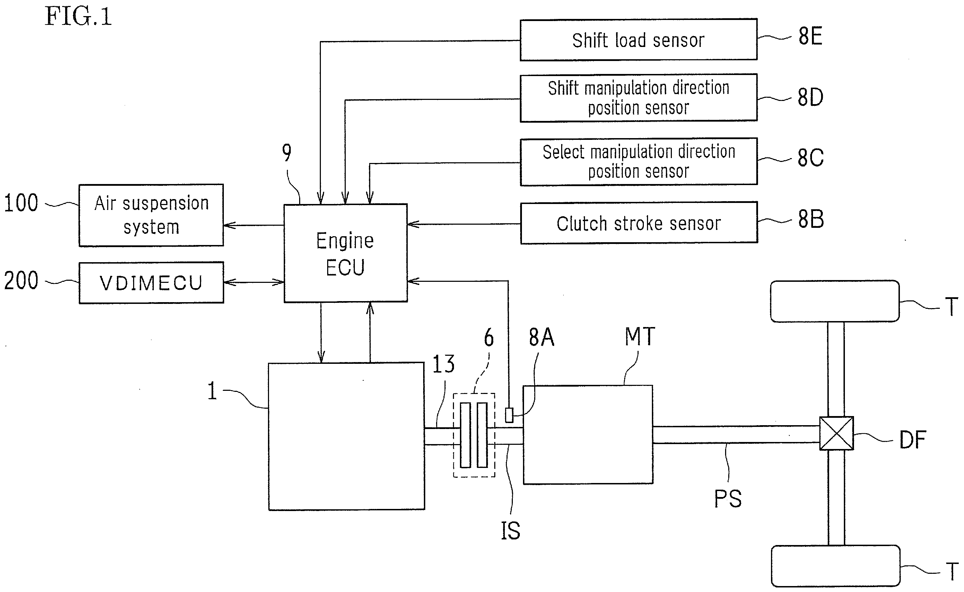

FIG. 1 shows a schematic configuration of a power train mounted in a vehicle according to this embodiment. In FIG. 1, reference numeral 1 denotes an engine (drive source), MT denotes a manual transmission, 6 denotes a clutch device, and 9 denotes an engine ECU (Electronic Control Unit).

In the power train shown in FIG. 1, a rotational driving force (torque) generated in the engine 1 is input to the manual transmission MT via the clutch device 6. The manual transmission MT shifts the rotational driving force at an appropriate shift ratio (shift ratio associated with a shift stage selected through manipulation of a shift lever by a driver). The shifted rotational driving force is transmitted to left and right rear wheels (driving wheels) T via a propeller shaft PS and a differential gear DF. It is noted that the manual transmission MT mounted in the vehicle according to this embodiment is a synchro-mesh manual transmission having six forward shift stages and one backward shift stage.

The entire configuration of the engine 1, the clutch device 6, a control system, and the like will be described below.

### -Entire Configuration of Engine 1-

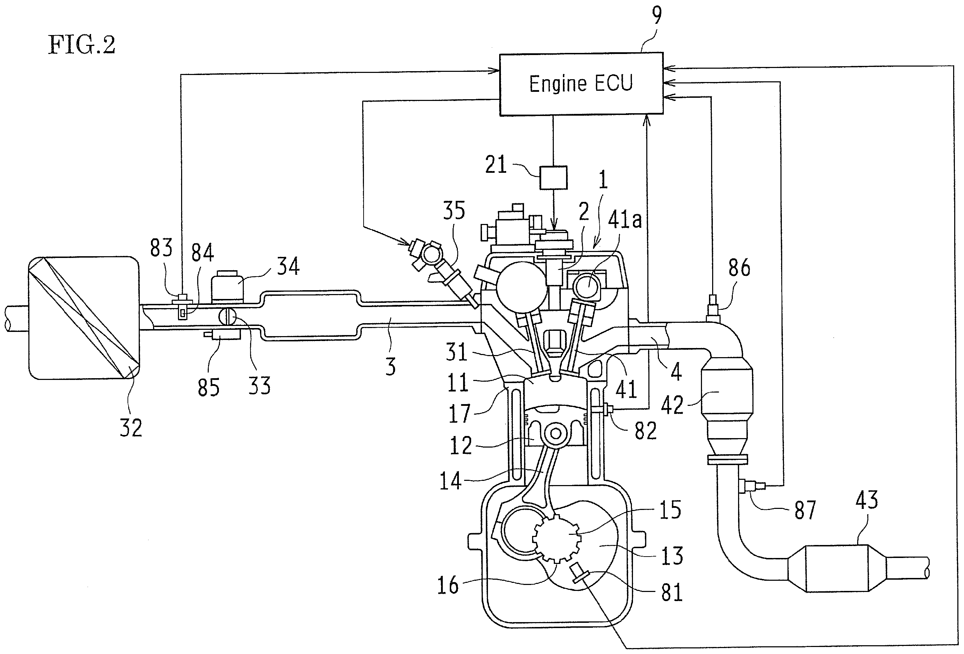

FIG. 2 is a diagram illustrating a schematic configuration of the engine 1 and an intake/exhaust system for the engine 1. It is noted that FIG. 2 shows the configuration of only one cylinder of the engine 1.

The engine 1 of this embodiment is, for example, a four-cylinder engine and includes a piston 12 defining a combustion chamber 11 and a crankshaft 13 serving as an output shaft. The piston 12 is coupled to the crankshaft 13 via a connecting rod 14, and the reciprocating movement of the piston 12 is converted into rotational movement of the crankshaft 13 by the connecting rod 14.

The crankshaft 13 is attached with, on its outer peripheral surface, a signal rotor 15 having a plurality of protrusions (teeth) 16. Adjacent to a side of the signal rotor 15, a crank position sensor (engine revolution sensor) 81 is disposed. The crank position sensor 81 is, for example, an electromagnetic pickup, and generates pulse signals (output pulses) that correspond to the protrusions 16 of the signal rotor 15 when the crankshaft 13 rotates.

In a cylinder block 17 of the engine 1, a water temperature sensor 82 to detect engine water temperature (coolant temperature) is disposed.

An ignition plug 2 is disposed in the combustion chamber 11 of the engine 1. The ignition timing of the ignition plug 2 is adjusted by an igniter 21. This igniter 21 is controlled by the engine ECU 9.

An intake path 3 and an exhaust path 4 are coupled to the combustion chamber 11 of the engine 1. An intake valve 31 is disposed between the intake path 3 and the combustion chamber 11. The intake valve 31 is drivingly opened and closed to implement communication and disconnection between the intake path 3 and the combustion chamber 11. An exhaust valve 41 is disposed between the exhaust path 4 and the combustion chamber 11. The exhaust valve 41 is drivingly opened and closed to implement communication and disconnection between the exhaust path 4 and the combustion chamber 11. The open/close drive of the intake valve 31 and the exhaust valve 41 is carried out respectively based on rotation of an intake camshaft (not shown) and an exhaust camshaft 41a, to which the rotation of the crankshaft 13 is transmitted.

Along the intake path 3, an air cleaner 32, a hot-wire type airflow meter 83, an intake air temperature sensor 84 (built in the airflow meter 83), and an electronically controlled throttle valve 33 to regulate an intake air amount of the engine 1 are disposed. The throttle valve 33 is driven by a throttle motor 34. The opening degree of the throttle valve 33 is detected by a throttle opening degree sensor 85.

Also along the intake path 3, an injector 35 for fuel injection is disposed. The injector 35 is supplied with fuel having a predetermined fuel pressure from a fuel tank via a fuel pump, and the fuel is injected to the intake path 3. The injection fuel is mixed with intake air into mixture, which is then introduced into the combustion chamber 11 of the engine 1. The mixture (fuel and air) introduced in the combustion chamber 11 is subjected to a compression process of the engine 1 and then ignited by the ignition plug 2 into combustion. The combustion of the mixture in the combustion chamber 11 causes the reciprocating movement of the piston 12, thereby rotating the crankshaft 13.

Two three-way catalysts 42 and 43 are provided in the exhaust path 4 of the engine 1. The three-way catalysts 42 and 43 have an O₂ storage function (oxygen storage function), for storing (occluding) oxygen. This oxygen storage function allows HC, CO, and NOx to be purified even if the air-fuel ratio deviates from a theoretical air-fuel ratio to some degree.

An air-fuel ratio sensor (A/F sensor) 86 is disposed on the upstream side of the three-way catalyst 42, which is on the upstream side of the exhaust path 4. An oxygen sensor (O₂ sensor) 87 is disposed on the upstream side of the three-way catalyst 43, which is on the downstream side of the exhaust path 4.

### -Clutch Device 6-

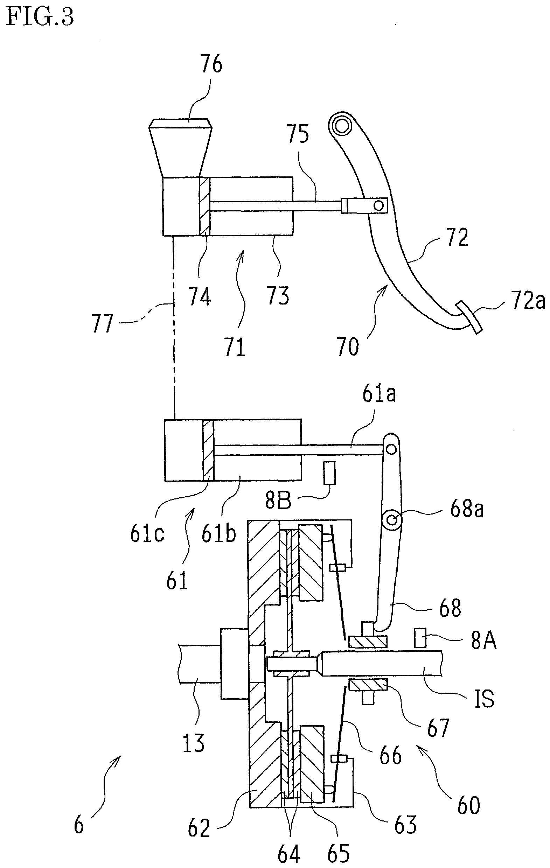

FIG. 3 shows a schematic configuration of the clutch device 6. As shown in FIG. 3, the clutch device 6 includes a clutch mechanism portion 60, a clutch pedal 70, a clutch master cylinder 71, and a clutch release cylinder 61.

The clutch mechanism portion 60 is interposed between the crankshaft 13 and an input shaft IS of the manual transmission MT (see FIG. 1). The clutch mechanism portion 60 transmits and disconnects the driving force from the crankshaft 13 to the input shaft IS, thus changing transmission states of the driving force. In this embodiment, the clutch mechanism portion 60 is a dry-type single plate friction clutch. It is also possible to employ any other configuration for the clutch mechanism portion 60.

Specifically, a flywheel 62 and a clutch cover 63 are integrally rotatably attached to the crankshaft 13, which is the input shaft of the clutch mechanism portion 60. A clutch disc 64 is splined to the input shaft IS, which is the output shaft of the clutch mechanism portion 60. This allows the clutch disc 64 to rotate integrally with the input shaft IS while being slidably shiftable in the axial direction (left and right direction in FIG. 3). A pressure plate 65 is disposed between the clutch disc 64 and the clutch cover 63. The pressure plate 65 is in contact with an outer end portion of a diaphragm spring 66 to be biased against the side of the flywheel 62 by the diaphragm spring 66.

A release bearing 67 is slidably attached to the input shaft IS in the axial direction. Adjacent to the release bearing 67, a release fork 68 is rotatably supported about a shaft 68a. One end portion (lower end portion in FIG. 3) of the release fork 68 is in contact with the release bearing 67. The other end portion (upper end portion in FIG. 3) of the release fork 68 is coupled to one end portion (right end portion in FIG. 3) of a rod 61a of the clutch release cylinder 61. The release fork 68 is activated to cause the engagement and release operations of the clutch mechanism portion 60.

The clutch pedal 70 includes a pedal lever 72 and a pedal portion 72a serving as a depressing portion and integrally formed at the lower end portion of the pedal lever 72. A position of the pedal lever 72 adjacent to its top end is supported rotatably about a horizontal axis by a clutch pedal bracket, not shown, attached to a dash panel that delimits the passenger compartment and the engine compartment. A pedal return spring, not shown, makes the pedal lever 72 biased in a rotating direction toward the incoming side (the driver side). The driver's depressing manipulation of the pedal portion 72a against the bias of the pedal return spring causes the release operation of the clutch mechanism portion 60. The driver's release of the depressing manipulation of the pedal portion 72a causes the engagement operation of the clutch mechanism portion 60 (these engagement and release operations will be described later).

The clutch master cylinder 71 includes a cylinder body 73 and a piston 74 built inside the cylinder body 73. The piston 74 is coupled to one end portion (left end portion in FIG. 3) of a rod 75, and the other end portion (right end portion in FIG. 3) of the rod 75 is coupled to an intermediate portion of the pedal lever 72. A reserve tank 76 to supply clutch fluid (oil), which is working fluid, to the cylinder body 73 is disposed above the cylinder body 73.

When the clutch master cylinder 71 receives a manipulation force through the depressing manipulation of the clutch pedal 70 manipulated by the driver, the piston 74 moves in the cylinder body 73 to generate oil pressure. Specifically, the depressing manipulation force caused by the driver is transmitted from the intermediate portion of the pedal lever 72 to the rod 75, thus generating oil pressure in the cylinder body 73. The oil pressure generated in the clutch master cylinder 71 is adjusted in accordance with the stroke position of the piston 74 in the cylinder body 73.

The oil pressure generated in the clutch master cylinder 71 is transmitted to the clutch release cylinder 61 through oil in an oil pressure piping 77.

Similarly to the clutch master cylinder 71, the clutch release cylinder 61 includes a cylinder body 61b and a piston 61c build inside the cylinder body 61b. The piston 61c is coupled to the other end portion (left end portion in FIG. 3) of the rod 61a. The stroke position of the piston 61c is adjusted in accordance with the oil pressure that the piston 61c receives.

In the clutch device 6, the release fork 68 is activated in accordance with the oil pressure in the clutch release cylinder 61, causing the engagement and release operations of the clutch mechanism portion 60. In this respect, in accordance with the amount of depressing manipulation of the clutch pedal 70, a clutch engaging force (clutch transmission capacity) of the clutch mechanism portion 60 is adjusted.

Specifically, when: the amount of depressing manipulation of the clutch pedal 70 is increased; oil is supplied from the clutch master cylinder 71 to the clutch release cylinder 61; and the oil pressure in the clutch release cylinder 61 is increased, then the piston 61c and the rod 61a are moved in the right direction of FIG. 3, the release fork 68 coupled to the rod 61a is rotated, and the release bearing 67 is pressed to the side of the flywheel 62. The movement of the release bearing 67 toward the side of the flywheel 62 causes the inner end portion of the diaphragm spring 66 to be elastically deformed toward the side of the flywheel 62. This reduces the bias of the diaphragm spring 66 against the pressure plate 65. This results in half-clutch state, where the pressure plate 65, the clutch disc 64, and the flywheel 62 are engaged while being slipped. When the bias is further reduced, the pressure plate 65, the clutch disc 64, and the flywheel 62 are detached from each other, turning the clutch mechanism portion 60 into release state. This disconnects the transmission of power from the engine 1 to the manual transmission MT. In this respect, when the amount of depressing manipulation of the clutch pedal 70 exceeds a predetermined amount, the clutch mechanism portion 60 turns into full release state, where the clutch mechanism portion 60 is fully detached (state of 0% clutch transmission capacity).

In contrast, when the amount of depressing manipulation of the clutch pedal 70 is decreased, the oil returns from the clutch release cylinder 61 to the clutch master cylinder 71. When the oil pressure in the clutch release cylinder 61 is decreased, the piston 61c and the rod 61a are moved in the left direction of FIG. 3. This rotates the release fork 68 to move the release bearing 67 to the side away from of the flywheel 62. This increases the bias of the outer end portion of the diaphragm spring 66 against the pressure plate 65. In this respect, a frictional force, that is, a clutch engaging force is generated between the pressure plate 65 and the clutch disc 64 and between the clutch disc 64 and the flywheel 62. When the clutch engaging force increases, the clutch mechanism portion 60 is engaged, which integrally rotates the pressure plate 65, the clutch disc 64, and the flywheel 62. This results in direct coupling between the engine 1 and the manual transmission MT. In this respect, when the amount of depressing manipulation of the clutch pedal 70 falls below a predetermined amount, the clutch mechanism portion 60 turns into full engagement state, where the clutch mechanism portion 60 is fully engaged (state of 100% clutch transmission capacity).

The clutch device 6 includes a clutch stroke sensor 8B to output an output signal in accordance with the manipulation amount (depressing amount) of the clutch pedal 70. For example, the clutch stroke sensor 8B detects the position of the rod 61a of the clutch release cylinder 61, so as to detect the manipulation amount of the clutch pedal 70 manipulated by the driver. The detection signal of the clutch stroke sensor 8B is output to the engine ECU 9 to realize recognition of the engaging state of the clutch mechanism portion 60. This ensures detection of a present clutch torque capacity (the maximum value of torque transmittable through the clutch mechanism portion 60). It is noted that the arrangement of the clutch stroke sensor 8B to is not limited to the vicinity of the rod 61a of the clutch release cylinder 61. The clutch stroke sensor 8B may also be disposed adjacent to the clutch pedal 70, in which case the movement amount of the clutch pedal 70 would be detected, or may be disposed adjacent to the release bearing 67, in which case the movement amount of the release bearing 67 would be detected.

An input revolution sensor 8A is disposed adjacent to the input shaft IS. The input revolution sensor 8A detects the revolutions (input shaft revolution, input shaft revolution speed) of the input shaft IS, and outputs a revolution speed signal to the engine ECU 9 (see FIG. 1).

### -Shift Pattern-

Next, description will be given with regard to a shift pattern (shift gate shape) of a shift gate that is disposed on the floor in the passenger compartment and guides the movement of the shift lever.

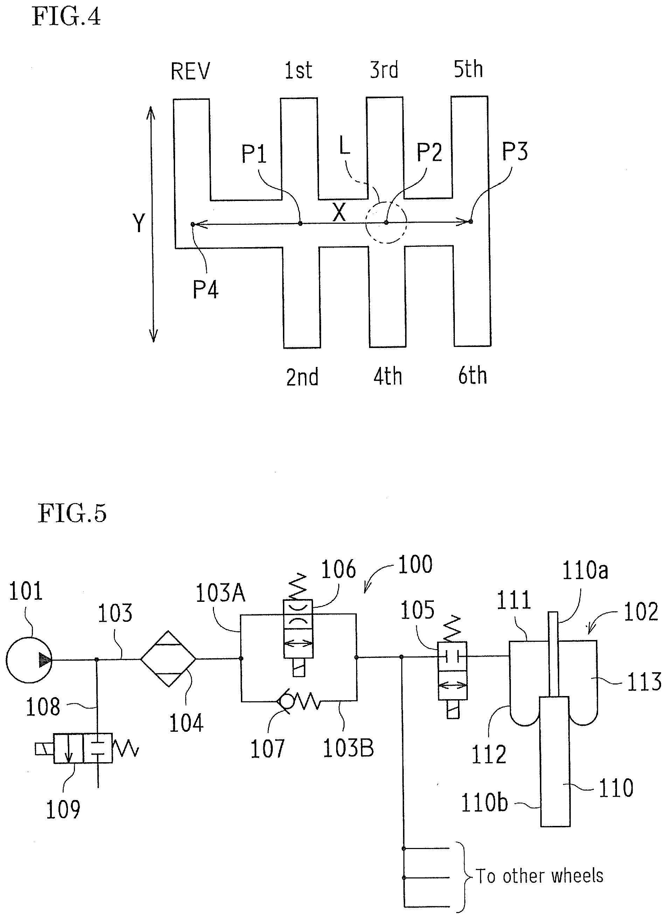

FIG. 4 is a schematic diagram illustrating a shift pattern of the manual transmission MT having six shift stages according to this embodiment. The shift lever L, which is shown in a dashed double-dotted line, is configured to perform a select manipulation shown in the direction of the arrow X in FIG. 4, and a shift manipulation shown in the direction of the arrow Y, which is orthogonal to the select manipulation direction.

In the select manipulation direction, a first-speed and second-speed select position P1, a third-speed and fourth-speed select position P2, a fifth-speed and sixth-speed select position P3, and a reverse select position P4 are arranged in a row.

By the shift manipulation (manipulation in the direction of the arrow Y) at the first-speed and second-speed select position P1, the shift lever L is shifted to a first speed position 1st or a second speed position 2nd. When the shift lever L is manipulated to the first speed position 1st, a first synchro-mesh mechanism disposed in the transmission mechanism of the manual transmission MT is operated to the establishment side of the first speed, thus establishing the first speed stage. When the shift lever L is manipulated to the second speed position 2nd, the first synchro-mesh mechanism is operated to the establishment side of the second speed, thus establishing the second speed stage.

Similarly, by the shift manipulation at the third-speed and fourth-speed select position P2, the shift lever L is shifted to a third speed position 3rd or a fourth speed position 4th. When the shift lever L is manipulated to the third speed position 3rd, a second synchro-mesh mechanism disposed in the transmission mechanism of the manual transmission MT is operated to the establishment side of the third speed, thus establishing the third speed stage. When the shift lever L is manipulated to the fourth speed position 4th, the second synchro-mesh mechanism is operated to the establishment side of the fourth speed, thus establishing the fourth speed stage.

By the shift manipulation at the fifth-speed and sixth-speed select position P3, the shift lever L is shifted to a fifth speed position 5th or a sixth speed position 6th. When the shift lever L is manipulated to the fifth speed position 5th, a third synchro-mesh mechanism disposed in the transmission mechanism of the manual transmission MT is operated to the establishment side of the fifth speed, thus establishing the fifth speed stage. When the shift lever L is manipulated to the sixth speed position 6th, the third synchro-mesh mechanism is operated to the establishment side of the sixth speed, thus establishing the sixth speed stage.

By the shift manipulation at the reverse select position P4, the shift lever L is shifted to a reverse position REV. When the shift lever L is manipulated to the reverse position REV, all of the above-described synchro-mesh mechanisms turn into neutral state, and a reverse idler gear disposed in the transmission mechanism of the manual transmission MT is operated, thus establishing the backward drive stage.

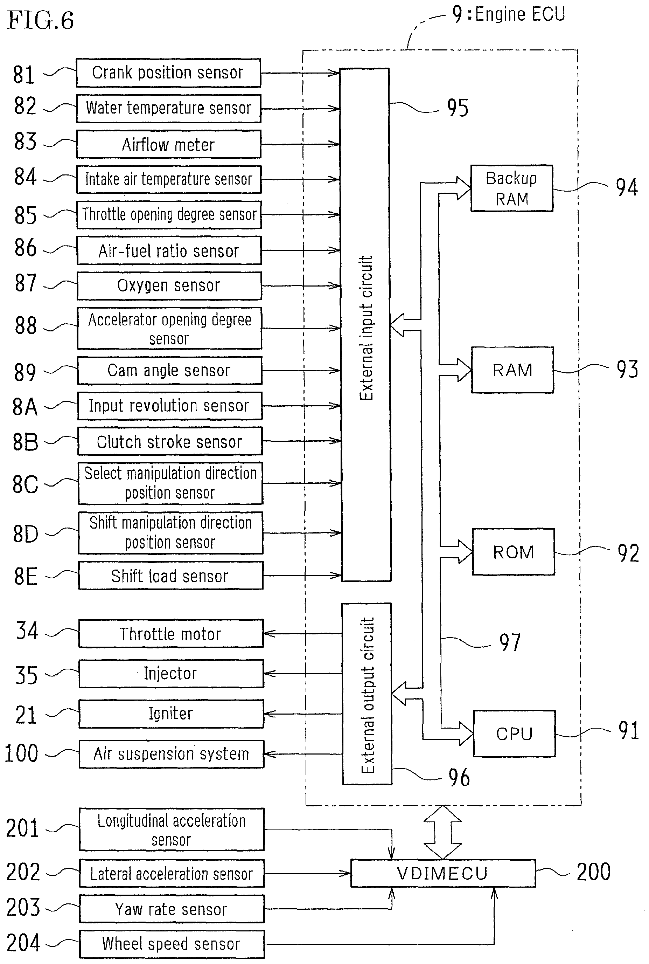

Sensors to detect the manipulation position of the shift lever L are provided, including a select manipulation direction position sensor 8C (see FIGs. 1 and 6) to detect the manipulation position of the shift lever L with respect to the select manipulation direction (the direction of the arrow X in FIG. 4), and a shift manipulation direction position sensor 8D (see FIGs. 1 and 6) to detect the manipulation position of the shift lever L with respect to the shift manipulation direction (the direction of the arrow Y in FIG. 4).

When, for example, the shift lever L undergoes select manipulation at neutral position, the select manipulation direction position sensor 8C detects where the manipulation position of the shift lever L is located from among the first-speed and second-speed select position P1, the third-speed and fourth-speed select position P2, the fifth-speed and sixth-speed select position P3, and the reverse select position P4. The shift manipulation direction position sensor 8D detects where the manipulation position of the shift lever L is located from among a vehicle front side position (position corresponding to the first speed position 1st, the third speed position 3rd, the fifth speed position 5th, and the reverse position REV), a vehicle rear side position (position corresponding to the second speed position 2nd, the fourth speed position 4th, and the sixth speed position 6th), and a neutral position (position corresponding to the first-speed and second-speed select position P1, the third-speed and fourth-speed select position P2, the fifth-speed and sixth-speed select position P3, and the reverse select position P4).

Specifically, when the shift lever L is manipulated, the manipulation position of the shift lever L determines a rotational position of a shift select shaft (for example, a rotational position corresponding to the position of the shift lever L in the select manipulation direction) and a slide movement position (for example, a slide movement position corresponding to the position of the shift lever L in the shift manipulation direction) for a shift select shaft used to transmit the manipulation force of the shift lever L to the synchro-mesh mechanisms of the transmission mechanism, not shown. The select manipulation direction position sensor 8C and the shift manipulation direction position sensor 8D each include a rotary encoder and a potentiometer to detect the rotational position and the slide movement position of the shift select shaft. Shift-lever-position signals from the select manipulation direction position sensor 8C and the shift manipulation direction position sensor 8D realize recognition of the present position of the shift lever L.

The shift lever L further includes a shift load sensor 8E to detect a shift load corresponding to the manipulation force caused by the driver with respect to the shift lever L (see FIGs. 1 and 6). Examples of the shift load sensor 8E include a strain gauge attached to the shift lever L. The shift load is detected utilizing the fact that as the shift load increases, the amount of strain generated in the shift lever L increases. Generally, as the manipulation speed of the shift lever L increases, the detected value of the shift load increases.

### (Air Suspension System)

The vehicle according to this embodiment includes an air suspension system as a suspension device. In order to ensure comfortable ride and steering maneuverability of the vehicle, the suspension of the air suspension system is an air spring. In accordance with the operation state of the vehicle, air is supplied into or discharged from the air spring to variably control the suspension properties (damping properties) of the air spring. The variable control of the suspension properties makes the behavior of the vehicle smooth with respect to rolling movement and pitching movement.

The outline of the air suspension system will be described below. FIG. 5 is a diagram schematically illustrating an air suspension system 100 according to this embodiment. As shown in FIG. 5, the air suspension system 100 includes: an air pump 101; a pipe 103 having one end coupled to the air pump 101 and the other end coupled to an air chamber 113 of an air spring 102 of each wheel; an air dryer 104 disposed on the pipe 103; and a normally-closed type electromagnetic opening/closing valve 105 disposed at a branch pipe portion of the pipe 103 leading to each wheel. The pipe 103 between the air dryer 104 and the electromagnetic opening/closing valve 105 is branched into two piping portions 103A and 103B. One piping portion 103A includes an electromagnetic switching valve 106, while the other piping portion 103B includes a check valve 107 that permits only a flow of air from the air dryer 104 to the air spring 102.

The electromagnetic switching valve 106 is switchable between a throttle position to throttle down the air flow of the piping portion 103A with an orifice and a communication position to permit air to freely flow in the piping portion 103A. The electromagnetic switching valve 106 is normally set at the throttle position. The pipe 103 between the air pump 101 and the air dryer 104 is coupled with one end of an air release pipe 108, and the other end of the air release pipe 108 is open to the atmosphere. The air release pipe 108 includes a normally-closed type electromagnetic opening/closing valve 109.

The air spring 102 includes: a chamber member 111 supported by a piston rod 110a of a shock absorber 110 or by the vehicle body; and a rolling diaphragm 112 arranged between the chamber member 111 and a cylinder 110b of the shock absorber 110. The chamber member 111 and the rolling diaphragm 112 constitute an air chamber 113.

The air pump 101, the electromagnetic opening/closing valve 105, the electromagnetic switching valve 106, and the electromagnetic opening/closing valve 109 are controlled by an air suspension ECU, not shown. The air suspension ECU controls the supply and discharge of air into and from the air chamber 113, thereby regulating the damping force of the suspension. The regulation of the damping force ensures absorption of an impact from the road surface, and facilitates the attempt to improve comfortable ride, steering stability, and turning properties. For example, for a traveling state where steering stability is emphasized, an adjustment is made to increase the damping force, while for a traveling state where comfortable ride is emphasized, an adjustment is made to decrease the damping force.

Instead of the above-described air suspension system 100, a damping force variable damper system may be used. In the damping force variable damper system, a magnetic viscous fluid fills upper and lower oil chambers in a cylinder, and an MLV coil disposed along the communication path between the oil chambers is energized so as to vary the viscosity of the magnetic viscous fluid, thus variably controlling the damping force.

### -Control System-

The engine ECU 9 controls various kinds of control such as the control of the operation state of the engine 1. As shown in FIG. 6, the engine ECU 9 includes a CPU (Central Processing Unit) 91, a ROM (Read Only Memory) 92, a RAM (Random Access Memory) 93, and a backup RAM 94.

The ROM 92 stores various control programs, maps that are referred to when executing those various control programs, and the like. The CPU 91 executes various kinds of arithmetic processing based on the various control programs and maps stored in the ROM 92. The RAM 93 is a memory that temporarily stores results of arithmetic operations of the CPU 91 and data input from each of the sensors, and the like. The backup RAM 94 is a nonvolatile memory that stores data and the like that need storing when the engine 1 is stopped.

The ROM 92, the CPU 91, the RAM 93, and the backup RAM 94 are coupled to each other via a bus 97, and are coupled to an external input circuit 95 and an external output circuit 96.

The external input circuit 95 is coupled with the crank position sensor 81, the water temperature sensor 82, the intake air temperature sensor 84, the throttle opening degree sensor 85, the air-fuel ratio sensor 86, and the oxygen sensor 87. In addition to the foregoing, the external input circuit 95 is coupled with an accelerator opening degree sensor 88 to detect the opening degree of the accelerator operated by the driver, a cam angle sensor 89 to detect the rotational position of the camshaft, the input revolution sensor 8A, the clutch stroke sensor 8B, the select manipulation direction position sensor 8C, the shift manipulation direction position sensor 8D, the shift load sensor 8E, and the like.

Meanwhile, the external output circuit 96 is coupled with a throttle motor 34 to drive the throttle valve 33, the injector 35, and the igniter 21, and the like.

The engine ECU 9 executes various kinds of control of the engine 1 based on detection signals from the above-described various sensors. For example, the engine ECU 9 executes ignition timing control of the known ignition plug 2, fuel injection control of the injector 35 (air-fuel ratio feedback control based on the outputs of the air-fuel ratio sensor 86 and the oxygen sensor 87), driving control of the throttle motor 34, and the like.

The external output circuit 96 is further coupled with the air suspension system 100, so that various sensor signals and control signals are transmitted to the air suspension system 100.

The engine ECU 9 exchanges various sensor signals and control signals with a VDIM (Vehicle Dynamics Integrated Management) ECU 200, described later. For example, the engine ECU 9 receives a control signal from the VDIM ECU 200 to control the engine 1 (control of the throttle motor 34, the ignition plug 2, and the like).

### (VDIM System)

The VDIM ECU 200 sets, for example, a dynamic demand engine torque that is demanded to the engine 1 for the purpose of stabilizing the behavior of the vehicle. The term dynamic demand engine torque means a demand engine torque in a transitional state where the output torque of the engine 1 is changing.

A VDIM system includes the VDIM ECU 200 and a variety of actuators (the throttle motor 34, the ignition plug 2, and the like) that are controlled based on control signals from the VDIM ECU 200. The VDIM system is a system that integrates VSC (Vehicle Stability Control), TRC (Traction Control), ABS (Anti Lock Brake System), EPS (Electric Power Steering), and the like. The VDIM system calculates a difference between: a traveling image of the driver obtained based on the amounts of manipulation of the accelerator, steering, and brake; and the vehicle behavior obtained based on information from the various sensors. In order to reduce the difference, the VDIM system controls the drive force of the vehicle, braking oil pressure, and the like.

The VSC is the kind of control that automatically sets optimal values of the braking oil pressure of each of the front and rear wheels, the dynamic demand engine torque of the vehicle, and the like when a sensor (lateral acceleration sensor 202, described later) detects a state in which the front and rear wheels are likely to skid. Thus, the VSC ensures stability of the vehicle.

The TRC is the kind of control that automatically sets optimal values of the braking oil pressure of each of the wheels, the dynamic demand engine torque of the vehicle, or the like when a sensor (wheel speed sensor 204, described later) senses slipping of the drive wheels at the time of starting and accelerating the vehicle on a slippery road surface. Thus, the TRC ensures optimal drive forces.

The ABS is a control system that automatically sets an optimal value of the braking oil pressure so as to prevent locking of the wheels.

The EPS is a control system that assists the steering of the steering wheel by the force of an electric motor.

These systems are known in the art, and therefore will not be elaborated in detail here.

The VDIM ECU 200 is coupled with sensors to detect the behavior of the vehicle, including a longitudinal acceleration sensor 201 to detect the longitudinal acceleration of the vehicle, a lateral acceleration sensor 202 to detect the lateral acceleration of the vehicle, a yaw rate sensor 203 to detect the yaw rate, and a wheel speed sensor 204 to detect the rotational speed of each wheel. The behavior of the vehicle is detected based on the detection signals from these sensors 201 to 204, and in order to stabilize the behavior of the vehicle, the VSC, TRC, ABS, EPS control is executed.

### -Driving Inclination Reflection Control-

Next, featured operations of this embodiment will be described. In the present invention, examples of "determination based on manipulation information that is variable in accordance with at least one of the shift manipulation and the clutch manipulation of the driver" include "determination of a driving inclination of the driver, the level of driving skill of the driver, and the degree of fatigue of the driver". In the following description, determination of a driving inclination of the driver will representatively be exemplified.

The engine ECU 9 determines a driving inclination of a driver and carries out the various kinds of control of the engine 1 and the like based on the result of determination as to the driving inclination. The various kinds of control of the engine 1 and the like that are based on the result of determination as to the driving inclination of the driver will be referred to as "driving inclination reflection control" (the control executed by the control means according to the present invention). The driving inclination reflection control will be described in detail below.

The driving inclination reflection control includes: an operation to determine a driving inclination of the driver based on changes in information (information on manipulation speeds and the like) attributed to the shift manipulation (manipulation of the clutch pedal 70 and manipulation of the shift lever L) by the driver (this operation being hereinafter referred to as "driving inclination determining operation"); and an operation to execute the control of the vehicle in accordance with the driving inclination determination result of the driving inclination determining operation (this operation being hereinafter referred to as "driving inclination reflection operation"). Each of the operations will be described in detail below.

### (Driving Inclination Determining Operation)

The driver's manipulations at the time of shifting with the manual transmission MT include a manual manipulation (shift manipulation) of the shift lever L, and a depressing manipulation and a depressing release manipulation (clutch manipulations) of the clutch pedal 70. Accordingly, the driving inclination determining operation includes "shift lever manipulation determining operation", by which a driving inclination is determined based on the manual manipulation of the shift lever L, and "clutch pedal manipulation determining operation", by which the driving inclination is determined based on the manipulation of the clutch pedal 70.

### <Shift Lever Manipulation Determining Operation>

As described above, the shift lever manipulation determining operation determines a driving inclination based on the manual manipulation of the shift lever L. Specifically, the driving inclination is determined based on at least one piece of information among the following information (manipulation information that is variable in accordance with the shift manipulation).

(S-1) Rate of change per unit time in revolution of the input shaft IS;
(S-2) Revolution of the input shaft IS;
(S-3) Manipulation movement amount per unit time of the shift lever L;
(S-4) Shift stage selected through manipulation of the shift lever L;
(S-5) Switching period of time of the shift stage through manipulation of the shift lever L; and
(S-6) Magnitude of the shift load.
Each will be described in detail below.

### (S-1) Rate of change per unit time in revolution of Input Shaft IS

The rate of change per unit time in revolution of the input shaft IS is obtained based on a time differential value (dNi/dt) of revolution of the input shaft IS (Ni: revolution of the input shaft IS at a preceding stage before the clutch device 6 is engaged) in the case where the shift stage of the transmission mechanism is switched through manual manipulation of the shift lever L. Specifically, the revolution of the input shaft IS is detected by the input revolution sensor 8A and differentiated by time. In other words, when the manual manipulation speed of the shift lever L manipulated by the driver is high, the shift stage is switched in a relatively short period of time. Hence, the rate of change per unit time in revolution of the input shaft IS increases. In contrast, when the manual manipulation speed of the shift lever L manipulated by the driver is low, the shift stage is switched in a relatively long period of time. Hence, the rate of change per unit time in revolution of the input shaft IS decreases. Thus, calculating the rate of change per unit time in revolution of the input shaft IS ensures determination of the manual manipulation speed of the shift lever L.

When the rate of change per unit time in revolution of the input shaft IS is higher than a predetermined value (when the manual manipulation speed of the shift lever L is high), a determination is made as to a driving inclination of the driver that high responsiveness of the vehicle control with respect to driving manipulation is in demand. The predetermined value is conveniently set experimentally or by other methods. The term "high responsiveness of the vehicle control with respect to driving manipulation" means that what is called sport mode driving is in demand, in which case, for example, the acceleration property of the vehicle is high (prompt acceleration) with respect to the depressing manipulation of the accelerator. This driving inclination will be hereinafter referred to as "sport mode driving inclination".

In contrast, when the rate of change per unit time in revolution of the input shaft IS is lower than a predetermined value (when the manual manipulation speed of the shift lever L is low), a determination is made as to a driving inclination of the driver that low responsiveness of the vehicle control with respect to driving manipulation is in demand. The predetermined value is also set conveniently set experimentally or by other methods. The term "low responsiveness of the vehicle control with respect to driving manipulation" means that what is called comfort mode driving (driving emphasizing comfortable ride) is in demand, in which case, for example, the acceleration property of the vehicle is low (gentle acceleration) with respect to the depressing manipulation of the accelerator. This driving inclination will be hereinafter referred to as "comfort mode driving inclination".

Thus, a driving inclination of the driver is determined based on the rate of change per unit time in revolution of the input shaft IS.

The period of time for calculating the rate of change per unit time in revolution of the input shaft IS may be set at any of various periods of time. Examples include (a) the period of time between shift start and shift completion, in which case an average rate of change in revolution of the input shaft IS in this period of time is obtained, and (b) a period of time immediately before shift completion, in which case the rate of change in revolution of the input shaft IS in the period of time immediately before shift completion is obtained.
These will be described below.
(a) The average rate of change in revolution of the input shaft IS in the period of time between shift start and shift completion is correlated to the time required between shift start and shift completion. Specifically, when the average rate of change in revolution of the input shaft IS in this period of time is high, the manual manipulation speed and the shift load of the shift lever L are high. This situation is determined as the sport mode driving inclination for the driving inclination of the driver. Conversely, when the average rate of change in revolution of the input shaft IS in this period of time is low, the manual manipulation speed and the shift load of the shift lever L are low. This situation is determined as the comfort mode driving inclination for the driving inclination of the driver.
(b) The rate of change in revolution of the input shaft IS at the time immediately before shift completion is correlated to a shift manipulation speed and a shift load associated with shifting from the neutral position to a target shift stage. For example, for an upshift from the first shift stage to the second shift stage, the corresponding shift manipulation speed and shift load are the shift manipulation speed and the shift load of the shift lever L at the time of manipulating the shift lever L from the first-speed and second-speed select position P1 (see FIG. 4) to the second speed position 2nd. When the rate of change in revolution of the input shaft IS at the time immediately before shift completion is high, the manual manipulation speed and the shift load of the shift lever L at the time immediately before shift completion are high. This situation is determined as the sport mode driving inclination for the driving inclination of the driver. Conversely, when the rate of change in revolution of the input shaft IS at the time immediately before shift completion is low, the manual manipulation speed and the shift load of the shift lever L at the time immediately before shift completion are low. This situation is determined as the comfort mode driving inclination for the driving inclination of the driver.

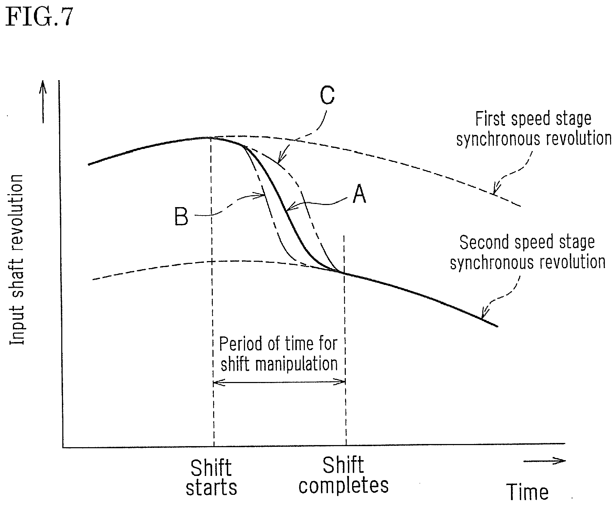

Referring to FIG. 7, description will be given in detail with regard to (b) the rate of change in revolution of the input shaft IS at the time immediately before shift completion. FIG. 7 shows a graph of changes in revolution of the input shaft IS at the time of an upshift from the first shift stage to the second shift stage, illustrating exemplary three different shift manipulations having mutually different manipulation conditions for the shift lever L (partially different shift manipulation speeds (shift loads)) even though the period of time for the shift manipulation (time required for the shift) is equal.

The changes A in revolution of the input shaft IS, which are indicated by the solid line in FIG. 7, are changes in revolution of the input shaft IS in the case where a driver carries out normal shift manipulation.

Comparatively, the changes B in revolution of the input shaft IS, which are indicated by the dashed-dotted line in FIG. 7, shows a high rate of change in revolution (decrement amount of revolution) of the input shaft IS at a manipulation start initial time of manipulation of the shift lever L from the first-speed and second-speed select position P1 (see FIG. 4) to the second speed position 2nd, while showing a low rate of change in revolution of the input shaft IS at the time immediately before the completion of manipulation of the shift lever L.

The changes C in revolution of the input shaft IS, which are indicated by the dashed double-dotted line in FIG. 7, show a low rate of change in revolution (decrement amount of revolution) of the input shaft IS at the manipulation start initial time of manipulation of the shift lever L from the first-speed and second-speed select position P1 (see FIG. 4) to the second speed position 2nd, while showing a high rate of change in revolution of the input shaft IS at the time immediately before the completion of manipulation of the shift lever L.

Thus, even though the period of time for the shift manipulation (time required for the shift) is equal, analyzing the changes in waveform of the revolution of the input shaft IS (that is, waveform analysis) ensures a determination as to whether the driving inclination of the driver is the sport mode driving inclination or the comfort mode driving inclination. For example, in the case of the changes in revolution of the input shaft IS indicated by the solid line A, a determination is made on the comfort mode driving inclination, whereas a determination is made on the sport mode driving inclination in the cases of the changes in revolution of the input shaft IS indicated by the dashed-dotted line B and the dashed double-dotted line C.

It is also possible to determine a driving inclination of the driver based on both of the rates of changes, namely, (a) the average rate of change in revolution of the input shaft IS in the period of time between shift start and shift completion, and (b) the rate of change in revolution of the input shaft IS at the time immediately before shift completion.

### (S-2) Revolution of the Input Shaft IS

Provided that the vehicle speed remains the same, as the shift stage is lower (the shift ratio is higher), the revolution of the input shaft IS (the revolution of the input shaft IS detected by the input revolution sensor 8A) increases. Thus, when the shift stage is low even though the vehicle speed remains the same, the driver is presumed to be driving with a driving inclination similar to a demand for steep acceleration of the vehicle. Conversely, when the shift stage is high even though the vehicle speed remains the same, the driver is presumed to be driving with a driving inclination similar to a demand for gentle acceleration of the vehicle. Accordingly, when the revolution of the input shaft IS is higher than a predetermined value (that is, the vehicle is running with a low shift stage selected; the revolution of the input shaft IS is higher than a predetermined value relative to the vehicle speed), this situation is determined as the sport mode driving inclination for the driving inclination of the driver. Conversely, when the revolution of the input shaft IS is lower than a predetermined value (that is, the vehicle is running with a high shift stage selected; the revolution of the input shaft IS is lower than a predetermined value relative to the vehicle speed), this situation is determined as the comfort mode driving inclination for the driving inclination of the driver. These predetermined values may be conveniently set experimentally or by other methods.

Thus, a driving inclination of the driver is determined based on the revolution of the input shaft IS.

### (S-3) Manipulation Movement Amount per unit time of Shift Lever L

The manipulation movement amount per unit time of the shift lever L is obtained based on a time differential value (dsfts/dt) of the movement amount (sfts) of the shift lever L in the case where the shift stage of the transmission mechanism is switched through manual manipulation of the shift lever L. Specifically, the movement amount of the shift lever L is detected by the select manipulation direction position sensor 8C and the shift manipulation direction position sensor 8D, and is differentiated by time. When the manipulation movement amount per unit time of the shift lever L is higher than a predetermined value, this situation is determined as the sport mode driving inclination for the driving inclination of the driver. Conversely, when the manipulation movement amount per unit time of the shift lever L is lower than a predetermined value, this situation is determined as the comfort mode driving inclination for the driving inclination of the driver. These predetermined values may be conveniently set experimentally or by other methods.

Thus, a driving inclination of the driver is determined based on the manipulation movement amount per unit time of the shift lever L.

When the manipulation movement amount per unit time of the shift lever L is used to determine a driving inclination of the driver, the period of time for calculating the manipulation movement amount per unit time may be set at any of various periods of time. Examples include (a) the period of time between shift start and shift completion, in which case an average manipulation movement speed of the shift lever L in this period of time is obtained, (b) an initial period of time of shift start, in which case the manipulation movement amount per unit time of the shift lever L in the initial period of time is obtained, (c) an intermediate period of time of the shift, in which case the manipulation movement amount per unit time of the shift lever L in the intermediate period of time is obtained, and (d) a period of time immediately before shift completion, in which case the manipulation movement amount per unit time of the shift lever L in the period of time immediately before shift completion is obtained.

### (S-4) Shift Stage Selected through Manipulation of Shift Lever L

When the shift stage is low (that is, when the shift stage selected through manipulation of the shift lever L is low; when the shift stage is a predetermined low shift stage relative to the vehicle speed) even though the vehicle speed remains the same, the driver is presumed to be driving with a driving inclination similar to a demand for steep acceleration of the vehicle. Conversely, when the shift stage is high (that is, when the shift stage selected through manipulation of the shift lever L is high; when the shift stage is a predetermined high shift stage relative to the vehicle speed), the driver is presumed to be driving with a driving inclination similar to a demand for gentle acceleration of the vehicle. When the vehicle is driving with the predetermined low shift stage selected, this situation is determined as the sport mode driving inclination for the driving inclination of the driver. Conversely, when the vehicle is driving with the predetermined high shift stage selected, this situation is determined as the comfort mode driving inclination for the driving inclination of the driver.

For example, suitable vehicle speeds are set in advance for the respective shift stages. Specifically, less than 20 km/h is allotted to the first shift stage, 25 km/h to 35 km/h is allotted to the second shift stage, 30 km/h to 50 km/h is allotted to the third shift stage, 45 km/h to 70 km/h is allotted to the fourth shift stage, 65 km/h to 90 km/ is allotted to the fifth shift stage, and equal to or more than 100 km/h is allotted to the sixth shift stage. When the actual vehicle speed is higher than these allotted vehicle speeds (that is, when the actual vehicle speed is higher than the vehicle speed allotted to the current shift stage), this situation is determined as the sport mode driving inclination for the driving inclination of the driver. In other words, when the currently selected shift stage is a shift stage lower than the shift stage that is assumed suitable for the vehicle speed, this situation is determined as the sport mode driving inclination for the driving inclination of the driver. Conversely, when the actual vehicle speed is lower than the allotted vehicle speeds (that is, when the actual vehicle speed is lower than the vehicle speed allotted to the current shift stage), this situation is determined as the comfort mode driving inclination for the driving inclination of the driver. In other words, when the currently selected shift stage is a shift stage higher than the shift stage that is assumed suitable for the vehicle speed, this situation is determined as the comfort mode driving inclination for the driving inclination of the driver.

Thus, a driving inclination of the driver is determined based on the shift stage selected through manipulation of the shift lever L.

### (S-5) Switching period of time of Shift Stage through Manipulation of Shift Lever L

When the manipulation speed of the shift lever L is high, the switching period of time of the shift stage (time required for switching manipulation of the shift stage) is short. Conversely, when the manipulation speed of the shift lever L is low, the switching period of time of the shift stage is long. That is, when the switching period of time of the shift stage through manipulation of the shift lever L is shorter than a predetermined period of time, this situation is determined as the sport mode driving inclination for the driving inclination of the driver. Conversely, when the switching period of time of the shift stage through manipulation of the shift lever L is longer than a predetermined period of time, this situation is determined as the comfort mode driving inclination for the driving inclination of the driver.

Specifically, the shift manipulation direction position sensor 8D detects a point of time when the manipulation of the shift lever L starts and a point of time when the manipulation of the shift lever L is complete. Then, the period between the points of time is calculated so as to obtain the switching period of time of the shift stage through manipulation of the shift lever L. The predetermined periods of time may be conveniently set experimentally or by other methods.

Thus, a driving inclination of the driver is determined based on the switching period of time of the shift stage through manipulation of the shift lever L.

### (S-6) Magnitude of Shift Load

When the manipulation speed of the shift lever L is high, the shift load is high. Conversely, when the manipulation speed of the shift lever L is low, the shift load is low. That is, when the shift load is higher than a predetermined value, this situation is determined as the sport mode driving inclination for the driving inclination of the driver. Conversely, when the shift load is lower than a predetermined value, this situation is determined as the comfort mode driving inclination for the driving inclination of the driver. These predetermined values may be conveniently set experimentally or by other methods.

Specifically, the shift load is detected by the shift load sensor 8E.

Thus, a driving inclination of the driver is determined based on the magnitude of the shift load.

It is noted that a plurality of operations among the above-described shift lever manipulation determining operations (S-1) to (S-6) may be combined in determining a driving inclination of the driver.

An exemplary combination is (S-1) the rate of change per unit time in revolution of the input shaft IS and (S-4) the shift stage selected through manipulation of the shift lever L. A determining operation for a driving inclination of the driver based on this combination will be described below.

When the driver manipulates the shift lever L, the manipulation force is easier to apply in the case of manipulation in the forward direction (the forward direction of the vehicle) than the case of manipulation in the backward direction (the backward direction of the vehicle). That is, the manipulation force is more likely to act in the pulling manipulation of the shift lever L than in the pushing manipulation of the shift lever L. This makes the manipulation speed liable to be higher in the pulling manipulation of the shift lever L. That is, the rate of change per unit time in revolution of the input shaft IS tends to be higher in the pulling manipulation. In other words, even though the driving inclination of the driver remains the same, a difference occurs between the determination on the driving inclination of the driver on the pushing manipulation side and the determination on the driving inclination of the driver on the pulling manipulation side.

In view of this, when the shift stage selected through manipulation of the shift lever L (the shift stage selected at the time of completion of shift) is on the pushing manipulation side, that is, when the selected shift stage corresponds to any one of the first shift stage, the third shift stage, and the fifth shift stage, then the rate of change per unit time in revolution of the input shaft IS is corrected in such a manner that the rate of change is slightly higher than the actual rate of change. The above-described rate of change is treated in the same manner as the case where any of the pulling manipulation side is selected, namely, the second shift stage, the fourth shift stage, and the sixth shift stage. Thus, a driving inclination of the driver is determined accurately.

It is noted that the above-described combination of (S-1) and (S-4) is not intended as limiting the combination of a plurality of operations among the shift lever manipulation determining operations (S-1) to (S-6), in determining a driving inclination of the driver. It is also possible to use any other kind of pair or a combination of equal to or more than three operations, in determining a driving inclination of the driver.

Examples of the conditions for executing the shift lever manipulation determining operations include "the vehicle is in warm-up completion state", and "the clutch device 6 is manipulated". These are for the following reasons. When the vehicle is not in warm-up completion state, the lubricant in the transmission mechanism has a high level of viscosity. The viscosity serves as a significant resistance against the manipulation of the shift lever, which makes difficult the accurate detection of a driving inclination of the driver. For this reason, "the vehicle is in warm-up completion state" is a condition for executing the driving inclination determining operations. When the shift operation is carried out without the manipulation of the clutch device 6, it is also difficult to accurately detect a driving inclination of the driver. For this reason, "the clutch device 6 is manipulated" is a condition for executing the driving inclination determining operations.

### <Clutch Pedal Manipulation Determining Operation>

Next, description will be given with regard to the clutch pedal manipulation determining operation (operation to determine a driving inclination of the driver based on manipulation of the clutch pedal 70). In the clutch pedal manipulation determining operation, a driving inclination is determined based on at least one piece of information among the following information (manipulation information that is variable in accordance with the clutch manipulation).

(C-1) Clutch torque (= clutch stroke position at the time of half clutch);
(C-2) Change in speed at the clutch stroke position; and
(C-3) Period of time before a predetermined clutch stroke is reached.
Each will be described in detail below.

### (C-1) Clutch Torque (= Clutch Stroke Position at the time of Half Clutch)

Generally, a clutch torque (Tc) is obtained by the addition (Tc = Te + Iedωe/dt) of an engine torque (Te) and an inertia torque (Iedωe/dt). The inertia torque is a torque that is transmitted in association with reducing the engine revolution at the time of engaging the clutch device 6. That is, when the engine torque remains the same, as the inertia torque increases, the clutch torque also increases. For example, in the situation where the amount of depressing manipulation of the accelerator at the time of engaging the clutch device 6 is high, when the depressing release speed of the clutch pedal 70 is high, the inertia torque per unit time increases. As a result, the clutch torque increases. This situation applies to the case where the driver is inclined to engage the clutch device 6 swiftly (in a short period of time). Accordingly, when the clutch torque is higher than a predetermined value (that is, when the clutch torque is higher than a predetermined value relative to the engine torque), this situation is determined as the sport mode driving inclination for the driving inclination of the driver. Conversely, when the clutch torque is lower than a predetermined value (that is, when the clutch torque is lower than a predetermined value relative to the engine torque), this situation is determined as the comfort mode driving inclination for the driving inclination of the driver. These predetermined values may be conveniently set experimentally or by other methods.

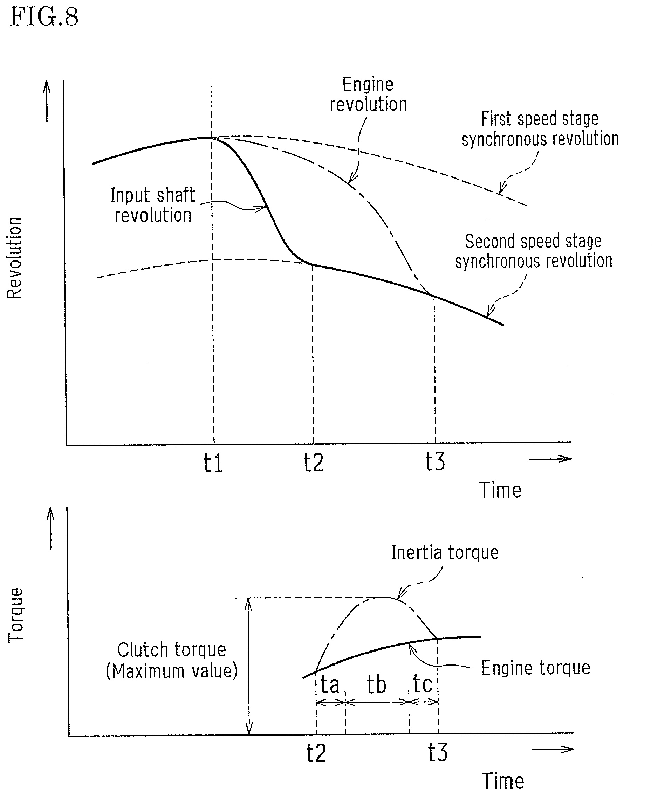

The clutch torque will be described by referring to FIG. 8. FIG. 8 shows, in upper part, exemplary changes in input shaft revolution and in engine revolution associated with a shift manipulation from the first shift stage to the second shift stage. FIG. 8 also shows, in lower part, exemplary changes in clutch torque in the above-described case. At timing t1 in the graph, the manipulation of the shift lever L starts from the first speed position 1st (see FIG. 4) to the first-speed and second-speed select position P1. At timing t2, the shift lever L is manipulated to the second speed position 2nd. Meanwhile, the clutch device 6 is gradually engaged with the input shaft revolution reaching a second speed stage synchronous revolution. Then at timing t3, the clutch device 6 is fully engaged, and the engine revolution reaches the second speed stage synchronous revolution.

To describe the change of the clutch torque in this case, the inertia torque increases from timing t2, which is the start of the engagement operation of the clutch device 6 (the depressing release manipulation of the clutch pedal), and the addition of the inertia torque and the engine torque results in the clutch torque. As the maximum value of the clutch torque increases, the inertia torque also increases (see the dashed-dotted line in the lower portion of FIG. 8). This situation is determined as the sport mode driving inclination for the driving inclination of the driver.

It is noted that when the clutch device 6 in half clutch state (a state where slippage exists between the flywheel 62 and the clutch disc 64), the clutch torque corresponds to the clutch torque capacity. That is, when a difference exists between the engine revolution, which is calculated based on the output signal from the crank position sensor 81, and the revolution of the input shaft IS, which is detected by the input revolution sensor 8A, then the clutch torque at this moment is obtained based on the clutch stroke position (correlated to the clutch torque capacity), which is detected by the clutch stroke sensor 8B.

Thus, a driving inclination of the driver is determined based on the clutch torque.

The period of time for calculating the clutch torque may be set at any of various periods of time. Examples include (a) an initial period of time of clutch engagement start (for example, period ta shown in the lower part of FIG. 8), in which case a maximum value or average value of the clutch torque is obtained, (b) an intermediate period of time of clutch engagement (for example, period tb shown in the lower part of FIG. 8), in which case a maximum value or average value of the clutch torque is obtained, and (c) a period of time immediately before the completion of clutch engagement (for example, period tc shown in the lower part of FIG. 8), in which case a maximum value or average value of the clutch torque is obtained. In any of these periods, as the clutch torque (the maximum value or average value) increases, a determination is more likely made on the sport mode driving inclination for the driving inclination of the driver.

It is also possible to determine a driving inclination of the driver based on a plurality of pieces of information among (a) the clutch torque in the initial period of time of clutch engagement start, (b) the clutch torque in the intermediate period of time of clutch engagement, and (c) the clutch torque in the period of time immediately before the completion of clutch engagement.

### (C-2) Change in Speed at the Clutch Stroke Position

A change in speed at the clutch stroke position is obtained based on a time differential value (dclts/dt) of the manipulation movement amount (clts) of the clutch pedal 70. Specifically, the movement amount of the clutch stroke is detected by the clutch stroke sensor 8B and differentiated by time. When the change in speed at the clutch stroke position is higher than a predetermined value, this situation is determined as the sport mode driving inclination for the driving inclination of the driver. Conversely, when the change in speed at the clutch stroke position is lower than a predetermined value, this situation is determined as the comfort mode driving inclination for the driving inclination of the driver. These predetermined values may be conveniently set experimentally or by other methods.

Thus, a driving inclination of the driver is determined based on the change in speed at the clutch stroke position.

When the change in speed at the clutch stroke position is used to determine a driving inclination of the driver, the period of time for calculating the change in speed at the clutch stroke position may be set at any of various periods of time, similarly to the case of determining a driving inclination of the driver based on the clutch torque. Examples include (a) an initial period of time of clutch engagement start, in which case the change in speed in the initial period of time is obtained, (b) an intermediate period of time of clutch engagement, in which case the change in speed in the intermediate period of time is obtained, and (c) a period of time immediately before the completion of clutch engagement, in which case the change in speed in this period of time is obtained.

It is noted that the change in speed at the clutch stroke position is not limited to the change in speed at the time of the engagement manipulation of the clutch device 6 (at the time of the depressing release manipulation of the clutch pedal 70). It is also possible to use a change in speed at the time of the release manipulation of the clutch device 6 (at the depressing manipulation of the clutch pedal 70). That is, a driving inclination of the driver may be determined based on the depressing manipulation speed of the clutch pedal 70.

### (C-3) Period of time before a Predetermined Clutch Stroke is Reached

When the manipulation speed of the clutch pedal 70 is high, the time required for the engagement of the clutch device 6 is short. Conversely, when the manipulation speed of the clutch pedal 70 is low, the time required for the engagement of the clutch device 6 is long. That is, when the period of time before a predetermined clutch stroke is reached (for example, the period of time between non-engagement and engagement of the clutch device 6) is shorter than a predetermined value, this situation is determined as the sport mode driving inclination for the driving inclination of the driver. Conversely, when the period of time before a predetermined clutch stroke is reached is longer than a predetermined value, this situation is determined as the comfort mode driving inclination for the driving inclination of the driver. These predetermined values may be conveniently set experimentally or by other methods.

Specifically, the clutch stroke sensor 8B calculates the period of time between the start of manipulation of the clutch pedal and the completion of manipulation of the clutch pedal (clutch engagement).

Thus, a driving inclination of the driver is determined based on the period of time before a predetermined clutch stroke is reached.

It is noted that the period of time before a predetermined clutch stroke is reached is not limited to the period of time of the engagement manipulation of the clutch device 6 (the depressing release manipulation of the clutch pedal 70). It is also possible to use the period of time of the release manipulation of the clutch device 6 (the depressing manipulation of the clutch pedal 70).

The driving inclination determining operation may a combination of a plurality of operations among the above-described shift lever manipulation determining operations (S-1) to (S-6), and the above-described clutch pedal manipulation determining operations (C-1) to (C-3).

Examples of the conditions for executing the clutch pedal manipulation determining operations include "the vehicle is in warm-up completion state", and "any shift stage is established in the transmission mechanism at the time of manipulation of the clutch device 6". These are for the following reasons. When the vehicle is not in warm-up completion state, the lubricant in the clutch master cylinder 71 and the clutch release cylinder 61 has a high level of viscosity. The viscosity serves as a significant resistance against the manipulation of the clutch pedal, which makes difficult the accurate detection of a driving inclination of the driver. For this reason, "the vehicle is in warm-up completion state" is a condition for executing the driving inclination determining operations. When the clutch manipulation is carried out without any shift stage established, it is also difficult to accurately detect a driving inclination of the driver. For this reason, "any shift stage is established in the transmission mechanism at the time of manipulation of the clutch device 6" is a condition for executing the driving inclination determining operations.

For both cases of using the above-described shift lever manipulation determining operations and the above-described clutch pedal manipulation determining operations in determining a driving inclination, examples of the conditions for maintaining the result of determination of the driving inclination include:
(1) Until the next shift manipulation is executed;
(2) Until the vehicle stops; and
(3) Until the turn-off manipulation of the ignition is carried out.

That is, until any one of these manipulations is carried out, information on the result of determination of the driving inclination of the driver is stored in the RAM 93. Where necessary (that is, in accordance with start of the determining operation of the driving inclination of the driver), the information on the result of determination of the driving inclination is read from the RAM 93.

### (Driving Inclination Reflection Operation)

Next, description will be made with regard to the driving inclination reflection operation, which is vehicle control that reflects a driving inclination of the driver determined by the above-described driving inclination determining operations (the shift lever manipulation determining operation and the clutch pedal manipulation determining operation).

Specifically, the driving inclination reflection operation includes executing at least one of the following operations (operations to adjust the amount of control with respect to a control target of the vehicle).

(A-1) Throttle opening degree property regulating operation;
(A-2) Tip-in and tip-out property regulating operations;
(A-3) Fuel cut-on and fuel cut-off property regulating operations;
(A-4) VDIM intervention timing regulating operation; and
(A-5) Air suspension property regulating operation.
Each will be described in detail below.

### (A-1) Throttle Opening Degree Property Regulating Operation

The throttle opening degree property regulating operation is an operation that reflects a driving inclination of the driver to adjust the opening degree property of the throttle valve 33 relative to the depressing amount of the accelerator.

Specifically, when a driving inclination of the driver is the sport mode driving inclination, the opening degree of the throttle valve 33 relative to the depressing amount of the accelerator is set at a high level (that is, the annealing ratio relative to the opening degree control of the throttle valve 33 is set at a low level). Conversely, when a driving inclination of the driver is the comfort mode driving inclination, the opening degree of the throttle valve 33 relative to the depressing amount of the accelerator is at a low level (that is, the annealing ratio relative to the opening degree control of the throttle valve 33 is set at a high level).

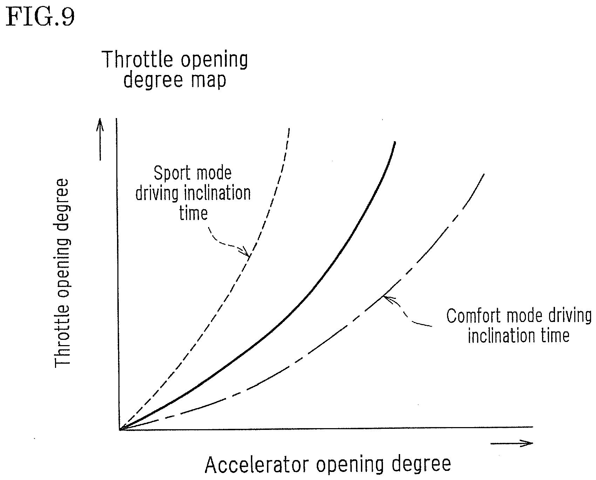

FIG. 9 shows a throttle opening degree map to determine the opening degree of the throttle valve 33 at the time of the throttle opening degree property regulating operation. The solid line in the graph shows a normal throttle opening degree property, which does not apply to the sport mode driving inclination or the comfort mode driving inclination for a driving inclination of the driver. When a determination is made on the sport mode driving inclination for a driving inclination of the driver, the throttle opening degree property is adjusted to the property shown in the curved dashed line in the graph, where the opening degree of the throttle valve 33 relative to the depressing amount of the accelerator is set at a high level. In contrast, when a determination is made on the comfort mode driving inclination for a driving inclination of the driver, the throttle opening degree property is adjusted to the property shown in the dashed-dotted line in the graph, where the opening degree of the throttle valve 33 relative to the depressing amount of the accelerator is set at a low level. This ensures that the acceleration performance of the vehicle increases in the case of the sport mode driving inclination while realizing comfortable ride in the case of the comfort mode driving inclination.

### (A-2) Tip-in and Tip-out Property Regulating Operations

The tip-in and tip-out property regulating operations are operations that reflect a driving inclination of the driver to adjust the opening degree property of the throttle valve 33 at the time of tip-in (that is, the case of a rapid increase in the depressing amount of the accelerator), and to adjust the opening degree property of the throttle valve 33 at the time of tip-out (that is, the case of a rapid decrease in the depressing amount of the accelerator).

First, the tip-in property regulating operation will be described. When a driving inclination of the driver is the sport mode driving inclination, the rate of change per unit time in opening degree of the throttle valve 33 at the time of tip-in (the rate of change in the opening direction) is set at a high level (that is, the annealing ratio relative to the opening degree control of the throttle valve 33 at the time of tip-in is set at a low level). Conversely, when a driving inclination of the driver is the comfort mode driving inclination, the rate of change per unit time in opening degree of the throttle valve 33 at the time of tip-in (the rate of change in the opening direction) is set at a low level (that is, the annealing ratio relative to the opening degree control of the throttle valve 33 at the time of tip-in is set at a high level).

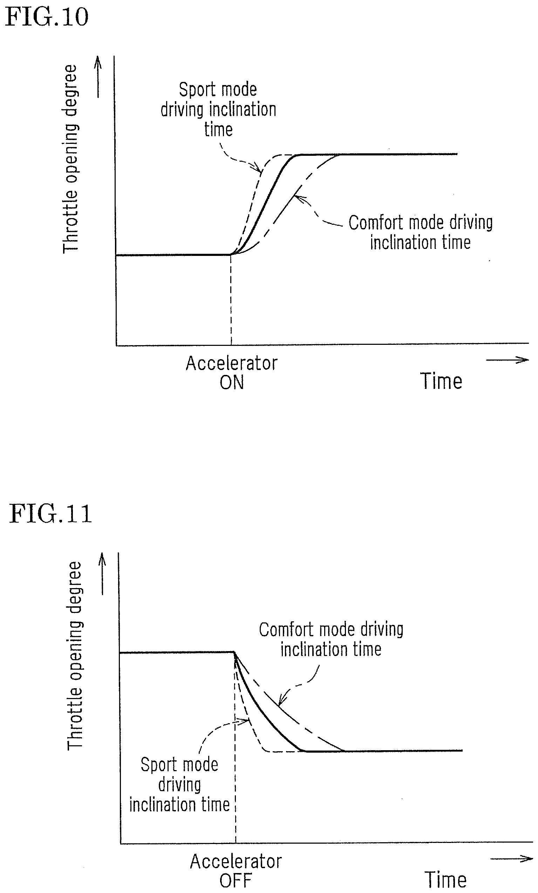

FIG. 10 is a timing chart illustrating changes in the opening degree of the throttle valve 33 at the time of the tip-in property regulating operation. The solid line in the graph indicates changes in a normal throttle opening degree property at the time of tip-in, which does not apply to the sport mode driving inclination or the comfort mode driving inclination for a driving inclination of the driver. When a determination is made on the sport mode driving inclination for a driving inclination of the driver, the rate of change per unit time in opening degree of the throttle valve 33 at the time of tip-in is set at a high level, as indicated by the curved dashed line in the graph. In contrast, when a determination is made on the comfort mode driving inclination for a driving inclination of the driver, the rate of change per unit time in opening degree of the throttle valve 33 at the time of tip-in is set at a low level, as indicated by the dashed-dotted line in the graph. This ensures that the vehicle improves its responsiveness at the time of tip-in in the case of the sport mode driving inclination while realizing comfortable ride at the time of tip-in in the case of the comfort mode driving inclination.

Next, the tip-out property regulating operation will be described. When a driving inclination of the driver is the sport mode driving inclination, the rate of change per unit time in opening degree of the throttle valve 33 at the time of tip-out (the rate of change in the closing direction) is set at a high level (that is, the annealing ratio relative to the opening degree control of the throttle valve 33 at the time of tip-out is set at a low level). Conversely, when a driving inclination of the driver is the comfort mode driving inclination, the rate of change per unit time in opening degree of the throttle valve 33 at the time of tip-out (the rate of change in the closing direction) is set at a low level (that is, the annealing ratio relative to the opening degree control of the throttle valve 33 at the time of tip-out is set at a high level).

FIG. 11 is a timing chart illustrating the change in opening degrees of the throttle valve 33 when the tip-out property regulating operation is carried out. The solid line in the graph indicates changes in a normal throttle opening degree at the time of tip-out, which does not apply to the sport mode driving inclination or the comfort mode driving inclination for a driving inclination of the driver. When a determination is made on the sport mode driving inclination for a driving inclination of the driver, the rate of change per unit time in opening degree of the throttle valve 33 at the time of tip-out is set at a high level, as indicated by the curved dashed line in the graph. In contrast, when a determination is made on the comfort mode driving inclination for a driving inclination of the driver, the rate of change per unit time in opening degree of the throttle valve 33 at the time of tip-out is set at a low level, as shown by the dashed-dotted line in the graph. This ensures that the vehicle improves its responsiveness at the time of tip-out in the case of the sport mode driving inclination while realizing comfortable ride at the time of tip-out in the case of the comfort mode driving inclination.

### (A-3) Fuel Cut-On and Fuel Cut-Off Property Regulating Operations

The fuel cut-on and fuel cut-off property regulating operations are operations that reflect a driving inclination of the driver at the fuel cut operations, which are executed in driven state with the accelerator fully closed. The fuel cut-on and fuel cut-off property regulating operations regulate the engine torque property at the time of fuel cut-on (when fuel injection from the injector 35 is discontinued), and regulate the engine torque property at the time of fuel cut-off (when fuel injection from the injector 35 is restarted).

First, the fuel cut-on property regulating operation will be described. When a driving inclination of the driver is the sport mode driving inclination, the engine torque property at the time of fuel cut-on is represented by a rapid reduction in torque and swift fuel cut (fuel injection discontinuation) (that is, the annealing ratio relative to the engine torque control is set at a low level). Conversely, when a driving inclination of the driver is the comfort mode driving inclination, the engine torque property at the time of fuel cut-on is represented by alleviation of the reduction of torque and a delay of fuel cut (that is, the annealing ratio relative to the engine torque control is set at a high level).

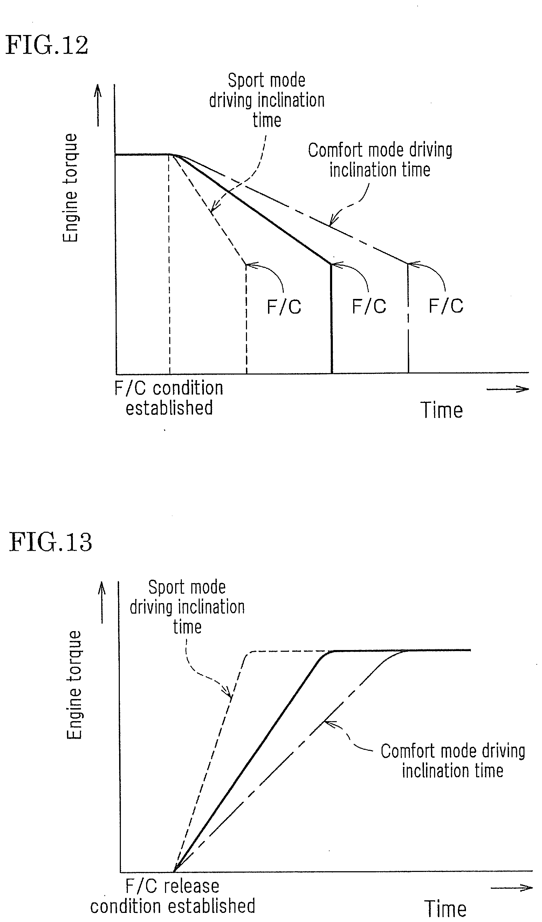

FIG. 12 is a timing chart illustrating changes in engine torque at the time of the fuel cut-on property regulating operation. The solid line in the graph indicates a normal engine torque property at the time of fuel cut-on, which does not apply to the sport mode driving inclination or the comfort mode driving inclination for a driving inclination of the driver. When a determination is made on the sport mode driving inclination for the driving inclination of the driver, the rate of change per unit time in engine torque at the time of fuel cut-on is set at a high level, as indicated by the dashed line in the graph. In contrast, when a determination is made on the comfort mode driving inclination for a driving inclination of the driver, the rate of change per unit time in engine torque at the time of fuel cut-on is set at a low level, as indicated by the dashed-dotted line in the graph.

More specifically, after a fuel cut condition (F/C condition) is satisfied, the engine torque is reduced by gradually delaying the ignition timing of the ignition plug 2. When the engine torque reaches a predetermined value, the fuel injection is discontinued. In this respect, when a determination is made on the sport mode driving inclination for a driving inclination of the driver, the amount of ignition delay per unit time is set at a high level, so as to swiftly reduce the engine torque and also swiftly discontinue the fuel injection. In contrast, when a determination is made on the comfort mode driving inclination for a driving inclination of the driver, the amount of ignition delay per unit time is set at a low level, so as to delay the reduction of engine torque and also delay the discontinuation of fuel injection.

This ensures that the vehicle improves its responsiveness at the time of fuel cut-on in the case of the sport mode driving inclination while realizing comfortable ride at the time of fuel cut-on in the case of the comfort mode driving inclination.

Next, the fuel cut-off property regulating operation will be described. When a driving inclination of the driver is the sport mode driving inclination, the engine torque property at the time of fuel cut-off is represented by a rapid increase in torque. Conversely, when a driving inclination of the driver is the comfort mode driving inclination, the engine torque property at the time of fuel cut-off is represented by a gentle increase in torque.

FIG. 13 is a timing chart illustrating changes in engine torque at the time of the fuel cut-off property regulating operation. The solid line in the graph indicates a normal engine torque property at the time of fuel cut-off, which does not apply to the sport mode driving inclination or the comfort mode driving inclination for a driving inclination of the driver. When a determination is made on the sport mode driving inclination for the driving inclination of the driver, the rate of change per unit time in engine torque at the time of fuel cut-off is set at a high level, as indicated by the dashed line in the graph. In contrast, when a determination is made on the comfort mode driving inclination for a driving inclination of the driver, the rate of change per unit time in engine torque at the time of fuel cut-off is set at a low level, as indicated by the dashed-dotted line in the graph.

More specifically, after a fuel cut release condition (F/C release condition) is satisfied, the engine torque is increased by restarting the fuel injection and gradually advancing the ignition timing of the ignition plug 2, thus obtaining a target engine torque that accords with the depressing amount of the accelerator and the like. In this respect, when a determination is made on the sport mode driving inclination for a driving inclination of the driver, the amount of ignition advance per unit time is set at a high level, thereby swiftly increasing the engine torque. In contrast, when a determination is made on the comfort mode driving inclination for a driving inclination of the driver, the amount of ignition advance per unit time is set at a low level, thereby delaying the increase of the engine torque.

This ensures that the vehicle improves its responsiveness at the time of fuel cut-off in the case of the sport mode driving inclination while realizing comfortable ride at the time of fuel cut-off in the case of the comfort mode driving inclination.

### (A-4) VDIM Intervention Timing Regulating Operation

The VDIM intervention timing regulating operation is an operation that reflects a driving inclination of the driver to adjust the intervention timing of the above-described VDIM control.

Specifically, when a driving inclination of the driver is the sport mode driving inclination, the intervention timing of VDIM control is delayed. Conversely, when a driving inclination of the driver is the comfort mode driving inclination, the intervention timing of VDIM control is advanced.

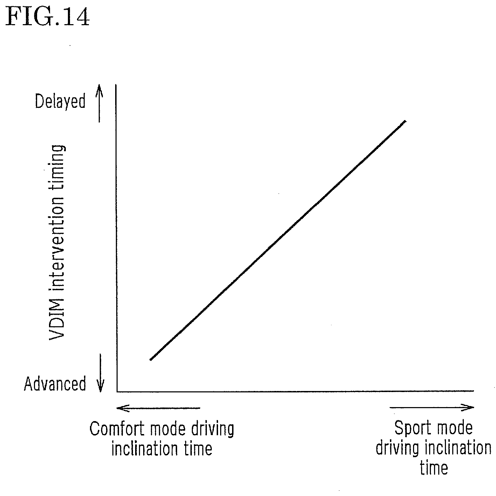

FIG. 14 is a VDIM intervention timing map to set the intervention timing of VDIM control in accordance with a driving inclination. According to this map, when a driving inclination of the driver is the sport mode driving inclination, and as this driving inclination increases, the intervention timing of VDIM control is further delayed. Conversely, when a driving inclination of the driver is the comfort mode driving inclination, and as this driving inclination increases, the intervention timing of VDIM control is further advanced. This ensures that in the case of the sport mode driving inclination, vehicle control in accordance with the manipulations of the driver (manipulations of the accelerator and steering) is executed continuously for a relatively long period of time, while in the case of the comfort mode driving inclination, vehicle control that swiftly realizes driving stability is executed.

### (A-5) Air Suspension Property Regulating Operation

The air suspension property regulating operation is an operation that reflects a driving inclination of the driver to adjust the damping property in the above-described air suspension system 100.

Specifically, when a driving inclination of the driver is the sport mode driving inclination, the damping force in the air suspension system 100 is set at a high level so as to obtain a traveling state where steering maneuverability is emphasized. Conversely, when a driving inclination of the driver is the comfort mode driving inclination, the damping force in the air suspension system 100 is set at a low level so as to obtain a traveling state where comfortable ride is emphasized.

### -Procedure for Driving Inclination Reflection Control-

Next, control procedure for actually executing the above-described driving inclination reflection control will be described. In this respect, a first embodiment is the case where a driving inclination of the driver is determined based on the shift lever manipulation determining operations in controlling the vehicle traveling state, while a second embodiment is the case where a driving inclination of the driver is determined based on the clutch pedal manipulation determining operations in controlling the vehicle traveling state.

### (First Embodiment)

The first embodiment employs, as the shift lever manipulation determining operation, a determining operation that is based on the rate of change per unit time in revolution of the input shaft IS (dNi/dt), and employs, as the driving inclination reflection operation, the throttle opening degree property regulating operation and the VDIM intervention timing regulating operation.

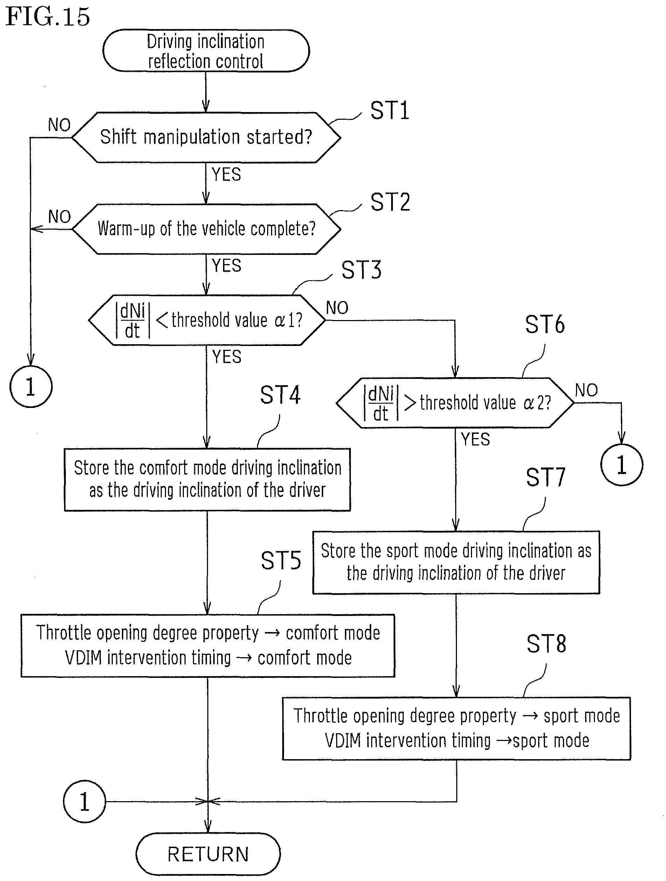

FIG. 15 is a flowchart illustrating the procedure for the control operation according to the first embodiment. The procedure of the flowchart is executed every few milliseconds after turn-on manipulation of the ignition switch.

First, at step ST1, a determination is made as to whether the shift manipulation is started. Specifically, a determination is made as to whether the clutch device 6 is manipulated and whether the manipulation of the shift lever L is started. Whether the clutch device 6 is manipulated is determined based on an output signal from the clutch stroke sensor 8B. Whether the manipulation of the shift lever L is started is determined based on an output signal from the shift manipulation direction position sensor 8D. The determination as to shift start may be made based on only one of the clutch manipulation and the shift lever manipulation.

At step ST1, when the shift manipulation is not started and a NO determination is made, the process returns without execution of the driving inclination reflection operation.

In contrast, at step ST1, when the shift manipulation is started and a YES determination is made, the process proceeds to step ST2, where a determination is made as to whether the warm-up of the vehicle is complete. The reason for this determination is as described above. When the warm-up of the vehicle is not complete and a NO determination is made at step ST2, the process returns without execution of the driving inclination reflection operation.

In contrast, at step ST2, when the warm-up of the vehicle is complete and a YES determination is made, the process proceeds to step ST3, where a determination is made as to whether the absolute value of the rate of change per unit time in revolution of the input shaft IS (dNi/dt) is less than a predetermined threshold value α1. That is, a determination is made as to whether the manual manipulation speed of the shift lever L is relatively low. The use of the absolute value is for the purpose of ensuring a determination that can be made irrespective of whether the shift manipulation is the upshift manipulation or the downshift manipulation.

At step ST3, when the absolute value of the rate of change per unit time in revolution of the input shaft IS (dNi/dt) is less than the predetermined threshold value α1 and a YES determination is made, the process proceeds to step ST4, where the comfort mode driving inclination is determined as a driving inclination of the driver. Information on the determination is stored in the RAM 93, and the process proceeds to step ST5.

At step ST5, the throttle opening degree property is set at the comfort mode. That is, the opening degree of the throttle valve 33 relative to the depressing amount of the accelerator is set at a low level (see the property indicated by the dashed-dotted line in FIG. 9). Also, the VDIM intervention timing is set at the comfort mode. That is, the intervention timing of VDIM control is delayed.

In contrast, at step ST3, when the absolute value of the rate of change per unit time in revolution of the input shaft IS (dNi/dt) is equal to or more than the predetermined threshold value α1 and a NO determination is made, the process proceeds to step ST6, where a determination is made as to whether the absolute value of the rate of change per unit time in revolution of the input shaft IS (dNi/dt) is more than a predetermined threshold value α2. That is, a determination is made as to whether the manual manipulation speed of the shift lever L is relatively high. The predetermined threshold value α2 is larger than the predetermined threshold value α1 by a predetermined amount. The use of the absolute value is for the purpose of ensuring a determination that can be made irrespective of whether the shift manipulation is the upshift manipulation or the downshift manipulation.

At step ST6, when the absolute value of the rate of change per unit time in revolution of the input shaft IS (dNi/dt) is more than the predetermined threshold value α2 and a YES determination is made, the process proceeds to step ST7, where the sport mode driving inclination is determined as a driving inclination of the driver. Information on the determination is stored in the RAM 93, and the process proceeds to step ST8.

At step ST8, the throttle opening degree property is set at the sport mode driving inclination. That is, the opening degree of the throttle valve 33 relative to the depressing amount of the accelerator is set at a high level (see the property indicated by the dashed line in FIG. 9). Also, the VDIM intervention timing is set at the sport mode driving inclination. That is, the intervention timing of VDIM control is advanced.

In contrast, at step ST6, when the absolute value of the rate of change per unit time in revolution of the input shaft IS (dNi/dt) is equal to or less than the predetermined threshold value α2 and a NO determination is made, a determination is made that a driving inclination of the driver is neither the sport mode driving inclination nor the comfort mode driving inclination, and the process returns with nothing being done.

These operations are executed every time the shift manipulation is started, thus setting the throttle opening degree property and the intervention timing of VDIM control in accordance with a driving inclination of the driver.

### (Second Embodiment)

The second embodiment employs, as the clutch pedal manipulation determining operation, a determining operation that is based on the clutch torque and the clutch manipulation speed (change in speed at the clutch stroke position), and employs, as the driving inclination reflection operation, the throttle opening degree property regulating operation and the VDIM intervention timing regulating operation.

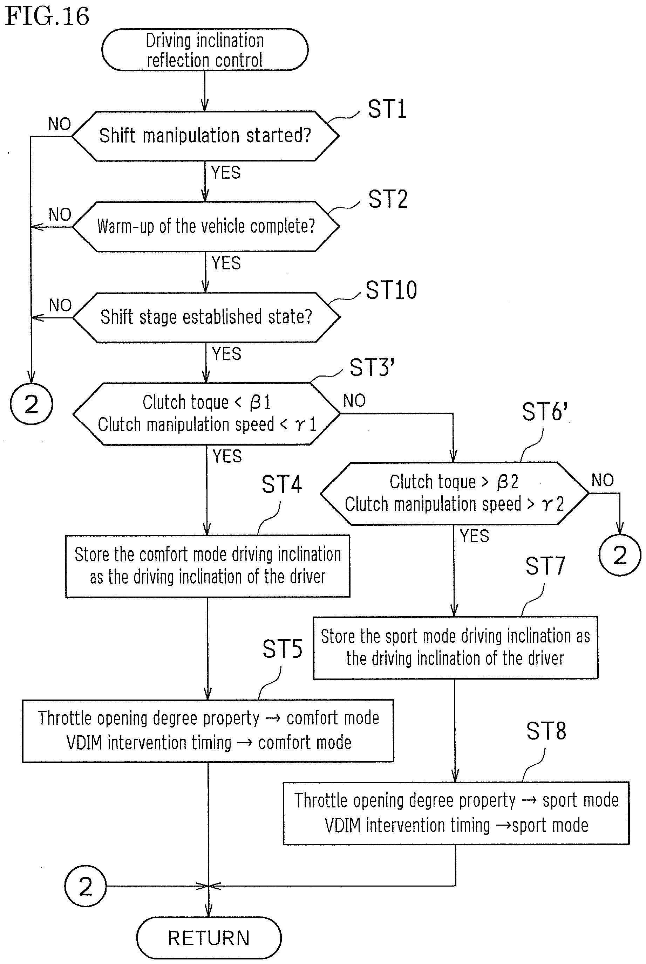

FIG. 16 is a flowchart illustrating the procedure for the control operation according to the second embodiment. In this flowchart, the same operations as those in the flowchart (FIG. 15) of the first embodiment are assigned the same step numbers. The procedure of the flowchart according to the second embodiment is also executed every few milliseconds after turn-on manipulation of the ignition switch.

First, when both the determining operation (determining operation as to whether the shift manipulation is started) at step ST1 and the determining operation (determining operation as to whether the warm-up of the vehicle is complete) at step ST2 result in YES determinations, the process proceeds to step ST10, where a determination is made as to whether any shift stage is currently established in the transmission mechanism. At step ST10, when no shift stage is established and a NO determination is made, the process returns without execution of the driving inclination reflection operation.

In contrast, at step ST10, when some shift stage is established and a YES determination is made, the process proceeds to step ST3', where a determination is made as to whether the clutch torque is less than a predetermined threshold value β1 and the clutch manipulation speed is less than a predetermined threshold value γ1. That is, a determination is made as to whether the manipulation speed of the clutch pedal 70 is relatively low.

At step ST3', when the clutch torque is less than the predetermined threshold value β1; the clutch manipulation speed is less than the predetermined threshold value γ1; and a YES determination is made, then the process proceeds to step ST4, where the comfort mode driving inclination is determined as a driving inclination of the driver. Information on the determination is stored in the RAM 93, and the process proceeds to step ST5. The operation at step ST5 is similar to the first embodiment.

In contrast, when a NO determination is made at step ST3', the process proceeds to step ST6', where a determination is made as to whether the clutch torque is more than a predetermined threshold value β2 and whether the clutch manipulation speed is more than a predetermined threshold value γ2. That is, a determination is made as to whether the manipulation speed of the clutch pedal 70 is relatively high. The predetermined threshold value β2 is larger than the predetermined threshold value β1 by a predetermined amount. The predetermined threshold value γ2 is larger than the predetermined threshold value γ1 by a predetermined amount.

At step ST6', when the clutch torque is more than the predetermined threshold value β2; the clutch manipulation speed is more than the predetermined threshold value 2; and a YES determination is made, then the process proceeds to step ST7, where the sport mode driving inclination is determined as a driving inclination of the driver. Information on the determination is stored in the RAM 93, and the process proceeds to step ST8. The operation at step ST8 is similar to the first embodiment.

In contrast, when a NO determination is made at step ST6', a determination is made that a driving inclination of the driver is neither the sport mode driving inclination nor the comfort mode driving inclination, and the process returns with nothing being done.

These operations are executed every time the shift manipulation is started, thus setting the throttle opening degree property and the intervention timing of VDIM control in accordance with a driving inclination of the driver.

As has been described hereinbefore, in the embodiments, based on information obtained from the shift manipulation and clutch manipulation by the driver, a determination is made as to whether a driving inclination of the driver is the sport mode driving inclination or the comfort mode driving inclination (see the shift lever manipulation determining operations (S-1) to (S-6) and the clutch pedal manipulation determining operations (C-1) to (C-3)). In accordance with the result of determination, the control state of the vehicle is adjusted (see the driving inclination reflection operations (A-1) to (A-3)). This realizes a traveling state of the vehicle that accords with a driving inclination of the driver, and enhances the marketability of the vehicle equipped with the manual transmission MT.

### -Other Embodiments-

In the above embodiments, description has been made with regard to the case where a driving inclination of the driver is determined based on the shift lever manipulation determining operations and the clutch pedal manipulation determining operations. The shift lever manipulation determining operations and the clutch pedal manipulation determining operations may be used as indicators to determine the level of driving skill of the driver. Specifically, the level of driving skill of the driver may be determined based on the shift lever manipulation determining operations and the clutch pedal manipulation determining operations, followed by control operations similar to the above-described driving inclination reflection operations in accordance with the result of determination of the level of driving skill (that is, driving skill level reflection operations).

Further, the shift lever manipulation determining operations and the clutch pedal manipulation determining operations may be used as indicators to determine the degree of fatigue of the driver. Specifically, the degree of fatigue of the driver may be determined based on the shift lever manipulation determining operations and the clutch pedal manipulation determining operations, followed by control operations similar to the above-described driving inclination reflection operations in accordance with the result of determination of the degree of fatigue (that is, fatigue degree reflection operations). As a fatigue degree reflection operation, it is also possible to make a notice to urge the driver to take a rest.

Also in the embodiments, the clutch stroke sensor 8B is provided as means for detecting the manipulation amount (depressing amount) of the clutch pedal 70. This, however, should not be construed in a limiting sense. It is also possible to provide a clutch switch to switch between on/off upon the clutch pedal 70 reaching a predetermined position, thus detecting the manipulation amount of the clutch pedal 70.

Also in the embodiments, the select manipulation direction position sensor 8C and the shift manipulation direction position sensor 8D are provided as means for detecting the manipulation position of the shift lever L. This, however, should not be construed in a limiting sense. It is also possible to provide a shift position sensor for each shift stage.

Also in the embodiments, description has been made with regard to the case where the present invention is applied to a synchro-mesh manual transmission that has six forward shift stages and one backward shift stage and that is mounted in an FR-type vehicle. This, however, should not be construed as limiting the present invention. The present invention may also be applied to manual transmissions mounted in vehicles of other configurations, such as FF (front-engine front-drive) vehicles. The present invention may also be applied to manual transmissions having a number of stages different from above (for example, five forward shift stages).

Also in the embodiments, description has been made with regard to the case where the present invention is applied to a vehicle in which the gasoline engine 1 is mounted as a drive source. This, however, should not be construed as limiting the present invention. The present invention may also be applied to vehicles in which diesel engines are mounted and to hybrid vehicles in which engines (internal combustion engines) and electric motors (for example, driving motors, motor generators, and the like) are mounted.

### Industrial Applicability

The present invention finds applications in control devices mounted in vehicles equipped with manual transmissions, where the control devices control the vehicles in accordance with the manipulation speed of the clutch pedal and the manipulation speed of the shift lever.

### Description of the Reference Numeral

- 1: Engine
- 34: Throttle motor
- 6: Clutch device
- 81: Crank position sensor
- 88: Accelerator opening degree sensor
- 8A: Input revolution sensor
- 8B: Clutch stroke sensor
- 8C: Select manipulation direction position sensor
- 8D: Shift manipulation direction position sensor
- 8E: Shift load sensor
- 9: Engine ECU
- 100: Air suspension system
- 200: VDIM ECU
- MT: Manual transmission
- IS: Input shaft (input shaft of manual transmission)
- L: Shift lever

## Claims

1. A control device for a vehicle, the control device comprising a manual transmission (MT) and/or a clutch device (6), the manual transmission being configured to select one of a plurality of shift stages through a shift manipulation of a driver, the clutch device being configured to engage and detach the manual transmission with and from a drive source through a clutch manipulation of the driver,
wherein the control device comprises control means for determining a driving inclination of the driver, a level of driving skill of the driver, or a degree of fatigue of the driver based on manipulation information that is variable in accordance with at least one of the shift manipulation and the clutch manipulation of the driver, and for controllably adjusting an amount of control with respect to a control target of the vehicle in accordance with the determined driving inclination, the determined level of driving skill, or the determined degree of fatigue, **characterized in that** said manipulation information comprises at least one of:
rate of change per unit time in revolution of the input shaft (IS);
revolution of the input shaft;
manipulation movement amount per unit time of the shift lever (L);
shift stage selected through manipulation of the shift lever;
switching period of time of the shift stage through manipulation of the shift lever;
magnitude of the shift load;
clutch torque;
change in speed at the clutch stroke position; and
period of time before a predetermined clutch stroke is reached.

2. The control device for a vehicle according to claim 1,
wherein the control means is configured to determine the driving inclination of the driver, the level of driving skill of the driver, or the degree of fatigue of the driver based on a rate of change per unit time in revolution of an input shaft of the manual transmission,
wherein when the rate of change per unit time in revolution of the input shaft of the manual transmission is higher than a predetermined value, the control device is configured to determine that high responsiveness of vehicle control is in demand with respect to driving manipulation, and
wherein when the rate of change per unit time in revolution of the input shaft of the manual transmission is lower than a predetermined value, the control device is configured to determine that low responsiveness of the vehicle control is in demand with respect to driving manipulation.

3. The control device for a vehicle according to claim 1,
wherein the control means is configured to determine the driving inclination of the driver, the level of driving skill of the driver, or the degree of fatigue of the driver based on revolution of an input shaft of the manual transmission,
wherein when the revolution of the input shaft is higher than a predetermined value relative to a vehicle speed, the control device is configured to determine that high responsiveness of vehicle control is in demand with respect to driving manipulation, and
wherein when the revolution of the input shaft is lower than a predetermined value relative to the vehicle speed, the control device is configured to determine that low responsiveness of the vehicle control is in demand with respect to driving manipulation.

4. The control device for a vehicle according to claim 1,
wherein the control means is configured to determine the driving inclination of the driver, the level of driving skill of the driver, or the degree of fatigue of the driver based on an manipulation movement amount per unit time of a shift lever operated by the driver,
wherein when the manipulation movement amount per unit time of the shift lever is higher than a predetermined value, the control device is configured to determine that high responsiveness of vehicle control is in demand with respect to driving manipulation, and
wherein when the manipulation movement amount per unit time of the shift lever is lower than a predetermined value, the control device is configured to determine that low responsiveness of the vehicle control is in demand with respect to driving manipulation.

5. The control device for a vehicle according to claim 1,
wherein the control means is configured to determine the driving inclination of the driver, the level of driving skill of the driver, or the degree of fatigue of the driver based on a shift stage selected through the shift manipulation,
wherein when the selected shift stage is a predetermined low shift stage relative to a vehicle speed, the control device is configured to determine that high responsiveness of vehicle control is in demand with respect to driving manipulation, and
wherein when the selected shift stage is a predetermined high shift stage relative to the vehicle speed, the control device is configured to determine that low responsiveness of the vehicle control is in demand with respect to driving manipulation.

6. The control device for a vehicle according to claim 1,
wherein the control means is configured to determine the driving inclination of the driver, the level of driving skill of the driver, or the degree of fatigue of the driver based on a switching period of time of a shift stage in the shift manipulation,
wherein when the switching period of time of the shift stage is shorter than a predetermined period of time, the control device is configured to determine that high responsiveness of vehicle control is in demand with respect to driving manipulation, and
wherein when the switching period of time of the shift stage is longer than a predetermined time, the control device is configured to determine that low responsiveness of the vehicle control is in demand with respect to driving manipulation.

7. The control device for a vehicle according to claim 1,
wherein the control means is configured to determine the driving inclination of the driver, the level of driving skill of the driver, or the degree of fatigue of the driver based on a magnitude of a shift load,
wherein when the shift load is higher than a predetermined value, the control device is configured to determine that high responsiveness of vehicle control is in demand with respect to driving manipulation, and
wherein when the shift load is lower than a predetermined value, the control device is configured to determine that low responsiveness of the vehicle control is in demand with respect to driving manipulation.

8. The control device for a vehicle according to claim 1,
wherein the control means is configured to determine the driving inclination of the driver, the level of driving skill of the driver, or the degree of fatigue of the driver based on a clutch torque associated with the clutch manipulation,
wherein when the clutch torque is higher than a predetermined value relative to an engine torque, the control device is configured to determine that high responsiveness of vehicle control is in demand with respect to driving manipulation, and
wherein when the clutch torque is lower than a predetermined value relative to the engine torque, the control device is configured to determine that low responsiveness of the vehicle control is in demand with respect to driving manipulation.

9. The control device for a vehicle according to claim 1,
wherein the control means is configured to determine the driving inclination of the driver, the level of driving skill of the driver, or the degree of fatigue of the driver based on a change in speed at a clutch stroke position associated with the clutch manipulation,
wherein when the change in speed at the clutch stroke position is higher than a predetermined value, the control device is configured to determine that high responsiveness of vehicle control is in demand with respect to driving manipulation, and
wherein when the change in speed at the clutch stroke position is lower than a predetermined value, the control device is configured to determine that low responsiveness of the vehicle control is in demand with respect to driving manipulation.

10. The control device for a vehicle according to claim 1,
wherein the control means is configured to determine the driving inclination of the driver, the level of driving skill of the driver, or the degree of fatigue of the driver based on a period of time before a clutch stroke reaches a predetermined amount in the clutch manipulation,
wherein when the period of time before the clutch stroke reaches the predetermined amount is shorter than a predetermined value, the control device is configured to determine that high responsiveness of vehicle control is in demand with respect to driving manipulation, and
wherein when the period of time before the clutch stroke reaches the predetermined amount is longer than a predetermined value, the control device is configured to determine that low responsiveness of the vehicle control is in demand with respect to driving manipulation.

11. The control device for a vehicle according to any one of claims 1 to 10,
wherein in accordance with the driving inclination of the driver, the level of driving skill of the driver, or the degree of fatigue of the driver, the control means is configured to adjust an smoothing ratio of the control with respect to the control target of the vehicle,
wherein when a determination is made that high responsiveness of vehicle control is in demand with respect to driving manipulation, the control means is configured to set the smoothing ratio of the control at a low level so as to set the amount of control at a high level, and
wherein when a determination is made that low responsiveness of the vehicle control is in demand with respect to driving manipulation, the control means is configured to set the smoothing ratio of the control at a high level so as to set the amount of control at a low level.

12. The control device for a vehicle according to any one of claims 1 to 10,
wherein in accordance with the driving inclination of the driver, the level of driving skill of the driver, or the degree of fatigue of the driver, the control means is configured to adjust an opening degree property of a throttle valve relative to a depressing amount of an accelerator by the driver,
wherein when a determination is made that high responsiveness of vehicle control is in demand with respect to driving manipulation, the control means is configured to increase an opening degree of the throttle valve relative to the depressing amount of the accelerator by the driver, and
wherein when a determination is made that low responsiveness of the vehicle control is in demand with respect to driving manipulation, the control means is configured to decrease the opening degree of the throttle valve relative to the depressing amount of the accelerator by the driver.

13. The control device for a vehicle according to any one of claims 1 to 10,
wherein in accordance with the driving inclination of the driver, the level of driving skill of the driver, or the degree of fatigue of the driver, the control means is configured to adjust an opening degree property of a throttle valve at a time of tip-in associated with manipulation of an accelerator by the driver,
wherein when a determination is made that high responsiveness of vehicle control is in demand with respect to driving manipulation, the control means is configured to increase a rate of change per unit time of an opening degree of the throttle valve at the time of tip-in, and
wherein when a determination is made that low responsiveness of the vehicle control is in demand with respect to driving manipulation, the control means is configured to decrease the rate of change per unit time of the opening degree of the throttle valve at the time of tip-in.

14. The control device for a vehicle according to any one of claims 1 to 10,
wherein in accordance with the driving inclination of the driver, the level of driving skill of the driver, or the degree of fatigue of the driver, the control means is configured to adjust an opening degree property of a throttle valve at a time of tip-out associated with manipulation of an accelerator by the driver,
wherein when a determination is made that high responsiveness of vehicle control is in demand with respect to driving manipulation, the control means is configured to increase a rate of change per unit time of an opening degree of the throttle valve at the time of tip-out, and
wherein when a determination is made that low responsiveness of the vehicle control is in demand with respect to driving manipulation, the control means is configured to decrease the rate of change per unit time of the opening degree of the throttle valve at the time of tip-out.

15. The control device for a vehicle according to any one of claims 1 to 10,
wherein in accordance with the driving inclination of the driver, the level of driving skill of the driver, or the degree of fatigue of the driver, the control means is configured to adjust a property of a generated torque at a time of fuel cut in an internal combustion engine (1) serving as a travel drive source of the vehicle,
wherein when a determination is made that high responsiveness of vehicle control is in demand with respect to driving manipulation, the control means is configured to increase a reduction amount per unit time of the generated torque at the time of fuel cut, and
wherein when a determination is made that low responsiveness of the vehicle control is in demand with respect to driving manipulation, the control means is configured to decrease the reduction amount per unit time of the generated torque at the time of fuel cut.

16. The control device for a vehicle according to any one of claims 1 to 10,
wherein in accordance with the driving inclination of the driver, the level of driving skill of the driver, or the degree of fatigue of the driver, the control means is configured to adjust a property of a generated torque after release of fuel cut in an internal combustion engine serving as a travel drive source of the vehicle,
wherein when a determination is made that high responsiveness of vehicle control is in demand with respect to driving manipulation, the control means is configured to increase an increase amount per unit time of the generated torque after the release of fuel cut, and
wherein when a determination is made that low responsiveness of the vehicle control is in demand with respect to driving manipulation, the control means is configured to decrease the increase amount per unit time of the generated torque after the release of fuel cut.

17. The control device for a vehicle according to any one of claims 1 to 10,
wherein in accordance with the driving inclination of the driver, the level of driving skill of the driver, or the degree of fatigue of the driver, the control means is configured to adjust an intervention timing of Vehicle Dynamics Integrated Management, VDIM, control carried out by a VDIM system to control a drive force of the vehicle and a braking oil pressure,
wherein the VDIM control calculates a difference between: a traveling image of the driver obtained based on the amounts of manipulation of an accelerator, steering and brake; and a vehicle behavior based on information from various sensors, and controls the drive force of the vehicle and the braking oil pressure to reduce the difference;
wherein when a determination is made that high responsiveness of vehicle control is in demand with respect to driving manipulation, the control means is configured to delay the intervention timing of the VDIM control, and
wherein when a determination is made that low responsiveness of the vehicle control is in demand with respect to driving manipulation, the control means is configured to advance the intervention timing of the VDIM control.

18. The control device for a vehicle according to any one of claims 1 to 10,
wherein in accordance with the driving inclination of the driver, the level of driving skill of the driver, or the degree of fatigue of the driver, the control means is configured to adjust a damping force of an air suspension disposed in a suspension device of the vehicle,
wherein when a determination is made that high responsiveness of vehicle control is in demand with respect to driving manipulation, the control means is configured to increase the damping force of the air suspension, and
wherein when a determination is made that low responsiveness of the vehicle control is in demand with respect to driving manipulation, the control means is configured to decrease the damping force of the air suspension.

## Patentansprüche

1. Steuervorrichtung für ein Fahrzeug, wobei die Steuervorrichtung ein Schaltgetriebe (MT) und/oder eine Kupplungsvorrichtung (6) umfasst, wobei das Schaltgetriebe dazu eingerichtet ist, durch eine Schaltbetätigung eines Fahrers eine von einer Vielzahl von Schaltstufen auszuwählen, wobei die Kupplungsvorrichtung dazu eingerichtet ist, das Schaltgetriebe durch eine Kupplungsbetätigung des Fahrers mit einer Antriebsquelle zu verbinden und von dieser zu trennen,
wobei die Steuervorrichtung eine Steuereinrichtung zum Bestimmen einer Fahrneigung des Fahrers, eines Niveaus der Fahrfertigkeit des Fahrers oder eines Ermüdungsgrades des Fahrers basierend auf Betätigungsinformationen, die entsprechend der Schaltbetätigung und/oder der Kupplungsbetätigung des Fahrers variabel sind, und zum steuerbaren Einstellen eines Steuerbetrags in Bezug auf ein Steuerziel des Fahrzeugs entsprechend der bestimmten Fahrneigung, dem bestimmten Niveau der Fahrfertigkeit oder dem bestimmten Ermüdungsgrad umfasst, **dadurch gekennzeichnet, dass** die Betätigungsinformationen mindestens eines umfassen von:
Änderungsrate pro Zeiteinheit in Umdrehung der Eingangswelle (IS);
Umdrehung der Eingangswelle;
Betätigungsbewegungsbetrag pro Zeiteinheit des Schalthebels (L);
durch Betätigung des Schalthebels gewählte Schaltstufe;
Schaltdauer der Schaltstufe durch Betätigung des Schalthebels;
Größe der Schaltlast;
Kupplungsdrehmoment;
Drehzahländerung an der Kupplungshubposition; und
Zeitdauer, bevor ein vorbestimmter Kupplungshub erreicht wird.

2. Steuervorrichtung für ein Fahrzeug nach Anspruch 1,
wobei die Steuereinrichtung dazu eingerichtet ist, die Fahrneigung des Fahrers, den Grad der Fahrfertigkeit des Fahrers oder den Ermüdungsgrad des Fahrers basierend auf einer Änderungsrate pro Zeiteinheit in Umdrehung einer Eingangswelle des Schaltgetriebes zu bestimmen,
wobei, wenn die Änderungsrate pro Zeiteinheit der Umdrehung der Eingangswelle des Schaltgetriebes höher als ein vorbestimmter Wert ist, die Steuervorrichtung dazu eingerichtet ist, zu bestimmen, dass eine hohe Reaktionsfähigkeit der Fahrzeugsteuerung in Bezug auf die Fahrtätigkeit erforderlich ist, und
wobei, wenn die Änderungsrate pro Zeiteinheit der Umdrehung der Eingangswelle des Schaltgetriebes niedriger als ein vorbestimmter Wert ist, die Steuervorrichtung dazu eingerichtet ist, zu bestimmen, dass eine niedrige Reaktionsfähigkeit der Fahrzeugsteuerung in Bezug auf die Fahrtätigkeit erforderlich ist.

3. Steuervorrichtung für ein Fahrzeug nach Anspruch 1,
wobei die Steuereinrichtung dazu eingerichtet ist, die Fahrneigung des Fahrers, den Grad der Fahrfertigkeit des Fahrers oder den Ermüdungsgrad des Fahrers basierend auf Umdrehung einer Eingangswelle des Schaltgetriebes zu bestimmen,
wobei, wenn die Umdrehung der Eingangswelle des Schaltgetriebes höher als ein vorbestimmter Wert relativ zu einer Fahrzeuggeschwindigkeit ist, die Steuervorrichtung dazu eingerichtet ist, zu bestimmen, dass eine hohe Reaktionsfähigkeit der Fahrzeugsteuerung in Bezug auf die Fahrtätigkeit erforderlich ist, und
wobei, wenn die Umdrehung der Eingangswelle des Schaltgetriebes niedriger als ein vorbestimmter Wert relativ zur Fahrzeuggeschwindigkeit ist, die Steuervorrichtung dazu eingerichtet ist, zu bestimmen, dass eine niedrige Reaktionsfähigkeit der Fahrzeugsteuerung in Bezug auf die Fahrtätigkeit erforderlich ist.

4. Steuervorrichtung für ein Fahrzeug nach Anspruch 1,
wobei die Steuereinrichtung dazu eingerichtet ist, die Fahrneigung des Fahrers, den Grad der Fahrfertigkeit des Fahrers oder den Ermüdungsgrad des Fahrers basierend auf einem Betätigungsbewegungsbetrag pro Zeiteinheit eines durch den Fahrer betätigten Schalthebels zu bestimmen,
wobei, wenn der Betätigungsbewegungsbetrag pro Zeiteinheit des Schalthebels höher als ein vorbestimmter Wert ist, die Steuervorrichtung dazu eingerichtet ist, zu bestimmen, dass eine hohe Reaktionsfähigkeit der Fahrzeugsteuerung in Bezug auf die Fahrtätigkeit erforderlich ist, und
wobei, wenn der Betätigungsbewegungsbetrag pro Zeiteinheit des Schalthebels niedriger als ein vorbestimmter Wert ist, die Steuervorrichtung dazu eingerichtet ist, zu bestimmen, dass eine niedrige Reaktionsfähigkeit der Fahrzeugsteuerung in Bezug auf die Fahrtätigkeit erforderlich ist.

5. Steuervorrichtung für ein Fahrzeug nach Anspruch 1,
wobei die Steuereinrichtung dazu eingerichtet ist, die Fahrneigung des Fahrers, den Grad der Fahrfertigkeit des Fahrers oder den Ermüdungsgrad des Fahrers basierend auf einer durch die Schaltbetätigung ausgewählten Schaltstufe zu bestimmen,
wobei, wenn die ausgewählte Schaltstufe eine vorbestimmte niedrige Schaltstufe relativ zu einer Fahrzeuggeschwindigkeit ist, die Steuervorrichtung dazu eingerichtet ist, zu bestimmen, dass eine hohe Reaktionsfähigkeit der Fahrzeugsteuerung in Bezug auf Fahrtätigkeit erforderlich ist, und
wobei, wenn die ausgewählte Schaltstufe eine vorbestimmte niedrige Schaltstufe relativ zur Fahrzeuggeschwindigkeit ist, die Steuervorrichtung dazu eingerichtet ist, zu bestimmen, dass eine niedrige Reaktionsfähigkeit der Fahrzeugsteuerung in Bezug auf Fahrtätigkeit erforderlich ist.

6. Steuervorrichtung für ein Fahrzeug nach Anspruch 1,
wobei die Steuereinrichtung dazu eingerichtet ist, die Fahrneigung des Fahrers, den Grad der Fahrfertigkeit des Fahrers oder den Ermüdungsgrad des Fahrers basierend auf einer Schaltdauer einer Schaltstufe bei der Schaltbetätigung zu bestimmen,
wobei, wenn die Schaltdauer der Schaltstufe kürzer als eine vorbestimmte Zeitdauer ist, die Steuervorrichtung dazu eingerichtet ist, zu bestimmen, dass eine hohe Reaktionsfähigkeit der Fahrzeugsteuerung in Bezug auf die Fahrtätigkeit erforderlich ist, und
wobei, wenn die Schaltdauer der Schaltstufe länger als eine vorbestimmte Dauer, die Steuervorrichtung dazu eingerichtet ist, zu bestimmen, dass eine niedrige Reaktionsfähigkeit der Fahrzeugsteuerung in Bezug auf die Fahrtätigkeit erforderlich ist.

7. Steuervorrichtung für ein Fahrzeug nach Anspruch 1,
wobei die Steuereinrichtung dazu eingerichtet ist, die Fahrneigung des Fahrers, den Grad der Fahrfertigkeit des Fahrers oder den Ermüdungsgrad des Fahrers basierend auf der Größe einer Schaltlast zu bestimmen,
wobei, wenn die Schaltlast höher als ein vorbestimmter Wert ist, die Steuervorrichtung dazu eingerichtet ist, zu bestimmen, dass eine hohe Reaktionsfähigkeit der Fahrzeugsteuerung in Bezug auf die Fahrtätigkeit erforderlich ist, und
wobei, wenn die Schaltlast niedriger als ein vorbestimmter Wert ist, die Steuervorrichtung dazu eingerichtet ist, zu bestimmen, dass eine niedrige Reaktionsfähigkeit der Fahrzeugsteuerung in Bezug auf die Fahrtätigkeit erforderlich ist.

8. Steuervorrichtung für ein Fahrzeug nach Anspruch 1,
wobei die Steuereinrichtung dazu eingerichtet ist, die Fahrneigung des Fahrers, den Grad der Fahrfertigkeit des Fahrers oder den Ermüdungsgrad des Fahrers basierend auf einem mit der Kupplungsbetätigung verbundenen Kupplungsdrehmoment zu bestimmen,
wobei, wenn das Kupplungsdrehmoment höher als ein vorbestimmter Wert relativ zu einem Motordrehmoment ist, die Steuervorrichtung dazu eingerichtet ist, zu bestimmen, dass eine hohe Reaktionsfähigkeit der Fahrzeugsteuerung in Bezug auf die Fahrtätigkeit erforderlich ist, und
wobei, wenn das Kupplungsdrehmoment niedriger als ein vorbestimmter Wert relativ zum Motordrehmoment ist, die Steuervorrichtung dazu eingerichtet ist, zu bestimmen, dass eine niedrige Reaktionsfähigkeit der Fahrzeugsteuerung in Bezug auf die Fahrtätigkeit erforderlich ist.

9. Steuervorrichtung für ein Fahrzeug nach Anspruch 1,
wobei die Steuereinrichtung dazu eingerichtet ist, die Fahrneigung des Fahrers, den Grad der Fahrfertigkeit des Fahrers oder den Ermüdungsgrad des Fahrers basierend auf einer Drehzahländerung bei einer mit der Kupplungsbetätigung verbundenen Kupplungshubposition zu bestimmen,
wobei, wenn die Drehzahländerung bei der Kupplungshubposition höher als ein vorbestimmter Wert ist, die Steuervorrichtung dazu eingerichtet ist, zu bestimmen, dass eine hohe Reaktionsfähigkeit der Fahrzeugsteuerung in Bezug auf die Fahrtätigkeit erforderlich ist, und
wobei, wenn die Drehzahländerung bei der Kupplungshubposition niedriger als ein vorbestimmter Wert ist, die Steuervorrichtung dazu eingerichtet ist, zu bestimmen, dass eine niedrige Reaktionsfähigkeit der Fahrzeugsteuerung in Bezug auf die Fahrtätigkeit erforderlich ist.

10. Steuervorrichtung für ein Fahrzeug nach Anspruch 1,
wobei die Steuereinrichtung dazu eingerichtet ist, die Fahrneigung des Fahrers, den Grad der Fahrfertigkeit des Fahrers oder den Ermüdungsgrad des Fahrers basierend auf einer Zeitdauer zu bestimmen, bevor ein Kupplungshub einen vorbestimmten Betrag bei der Kupplungsbetätigung erreicht,
wobei, wenn die Zeitdauer, bevor der Kupplungshub den vorbestimmten Betrag erreicht, kürzer als ein vorbestimmter Wert ist, die Steuervorrichtung dazu eingerichtet ist, zu bestimmen, dass eine hohe Reaktionsfähigkeit der Fahrzeugsteuerung in Bezug auf die Fahrtätigkeit erforderlich ist, und
wobei, wenn die Zeitdauer, bevor der Kupplungshub den vorbestimmten Betrag erreicht, länger als ein vorbestimmter Wert ist, die Steuervorrichtung dazu eingerichtet ist, zu bestimmen, dass eine niedrige Reaktionsfähigkeit der Fahrzeugsteuerung in Bezug auf die Fahrtätigkeit erforderlich ist.

11. Steuervorrichtung für ein Fahrzeug nach einem der Ansprüche 1 bis 10,
wobei entsprechend der Fahrneigung des Fahrers, dem Niveau der Fahrfertigkeit des Fahrers oder dem Ermüdungsgrad des Fahrers die Steuereinrichtung dazu eingerichtet ist, ein Glättungsverhältnis der Steuerung in Bezug auf das Steuerziel des Fahrzeugs einzustellen,
wobei, wenn festgestellt wird, dass eine hohe Reaktionsfähigkeit der Fahrzeugsteuerung in Bezug auf die Fahrtätigkeit erforderlich ist, die Steuereinrichtung dazu eingerichtet ist, das Glättungsverhältnis der Steuerung auf ein niedriges Niveau einzustellen, um den Steuerbetrag auf ein hohes Niveau einzustellen, und
wobei, wenn festgestellt wird, dass eine niedrige Reaktionsfähigkeit der Fahrzeugsteuerung in Bezug auf die Fahrtätigkeit erforderlich ist, die Steuereinrichtung dazu eingerichtet ist, das Glättungsverhältnis der Steuerung auf ein hohes Niveau einzustellen, um den Steuerbetrag auf ein niedriges Niveau einzustellen.

12. Steuervorrichtung für ein Fahrzeug nach einem der Ansprüche 1 bis 10,
wobei entsprechend der Fahrneigung des Fahrers, dem Niveau der Fahrfertigkeit des Fahrers oder dem Ermüdungsgrad des Fahrers die Steuereinrichtung dazu eingerichtet ist, eine Öffnungsgradeigenschaft einer Drosselklappe relativ zu einem Betätigungsbetrag eines Gaspedals durch den Fahrer einzustellen,
wobei, wenn festgestellt wird, dass eine hohe Reaktionsfähigkeit der Fahrzeugsteuerung in Bezug auf die Fahrtätigkeit erforderlich ist, die Steuereinrichtung dazu eingerichtet ist, einen Öffnungsgrad der Drosselklappe relativ zum Betätigungsbetrag des Gaspedals durch den Fahrer zu erhöhen, und
wobei, wenn festgestellt wird, dass eine niedrige Reaktionsfähigkeit der Fahrzeugsteuerung in Bezug auf die Fahrtätigkeit erforderlich ist, die Steuereinrichtung dazu eingerichtet ist, einen Öffnungsgrad der Drosselklappe relativ zum Betätigungsbetrag des Gaspedals durch den Fahrer zu verringern.

13. Steuervorrichtung für ein Fahrzeug nach einem der Ansprüche 1 bis 10,
wobei entsprechend der Fahrneigung des Fahrers, dem Niveau der Fahrfertigkeit des Fahrers oder dem Ermüdungsgrad des Fahrers die Steuereinrichtung dazu eingerichtet ist, eine Öffnungsgradeigenschaft einer Drosselklappe zum Zeitpunkt von Tipp-in, das mit der Betätigung eines Gaspedals durch den Fahrer verbunden ist, einzustellen,
wobei, wenn festgestellt wird, dass eine hohe Reaktionsfähigkeit der Fahrzeugsteuerung in Bezug auf die Fahrtätigkeit erforderlich ist, die Steuereinrichtung dazu eingerichtet ist, eine Änderungsrate pro Zeiteinheit eines Öffnungsgrades der Drosselklappe zum Zeitpunkt von Tipp-in zu erhöhen, und
wobei, wenn festgestellt wird, dass eine niedrige Reaktionsfähigkeit der Fahrzeugsteuerung in Bezug auf die Fahrtätigkeit erforderlich ist, die Steuereinrichtung dazu eingerichtet ist, die Änderungsrate pro Zeiteinheit des Öffnungsgrades der Drosselklappe zum Zeitpunkt von Tipp-in zu verringern.

14. Steuervorrichtung für ein Fahrzeug nach einem der Ansprüche 1 bis 10,
wobei entsprechend der Fahrneigung des Fahrers, dem Niveau der Fahrfertigkeit des Fahrers oder dem Ermüdungsgrad des Fahrers die Steuereinrichtung dazu eingerichtet ist, eine Öffnungsgradeigenschaft einer Drosselklappe zum Zeitpunkt von Tipp-out, das mit der Betätigung eines Gaspedals durch den Fahrer verbunden ist, einzustellen,
wobei, wenn festgestellt wird, dass eine hohe Reaktionsfähigkeit der Fahrzeugsteuerung in Bezug auf die Fahrtätigkeit erforderlich ist, die Steuereinrichtung dazu eingerichtet ist, eine Änderungsrate pro Zeiteinheit eines Öffnungsgrades der Drosselklappe zum Zeitpunkt von Tipp-out zu erhöhen, und
wobei, wenn festgestellt wird, dass eine niedrige Reaktionsfähigkeit der Fahrzeugsteuerung in Bezug auf die Fahrtätigkeit erforderlich ist, die Steuereinrichtung dazu eingerichtet ist, die Änderungsrate pro Zeiteinheit des Öffnungsgrades der Drosselklappe zum Zeitpunkt von Tipp-out zu verringern.

15. Steuervorrichtung für ein Fahrzeug nach einem der Ansprüche 1 bis 10,
wobei entsprechend der Fahrneigung des Fahrers, dem Niveau der Fahrfertigkeit des Fahrers oder dem Ermüdungsgrad des Fahrers die Steuereinrichtung dazu eingerichtet ist, eine Eigenschaft eines erzeugten Drehmoments zu einem Zeitpunkt der Kraftstoffabschaltung in einem Verbrennungsmotor (1), der als Fahrantriebsquelle des Fahrzeugs dient, einzustellen,
wobei, wenn festgestellt wird, dass eine hohe Reaktionsfähigkeit der Fahrzeugsteuerung in Bezug auf die Fahrtätigkeit erforderlich ist, die Steuereinrichtung dazu eingerichtet ist, einen Reduzierungsbetrag pro Zeiteinheit des erzeugten Drehmoments zum Zeitpunkt der Kraftstoffabschaltung zu erhöhen, und
wobei, wenn festgestellt wird, dass eine niedrige Reaktionsfähigkeit der Fahrzeugsteuerung in Bezug auf die Fahrtätigkeit erforderlich ist, die Steuereinrichtung dazu eingerichtet ist, einen Reduzierungsbetrag pro Zeiteinheit des erzeugten Drehmoments zum Zeitpunkt der Kraftstoffabschaltung zu verringern.

16. Steuervorrichtung für ein Fahrzeug nach einem der Ansprüche 1 bis 10,
wobei entsprechend der Fahrneigung des Fahrers, dem Niveau der Fahrfertigkeit des Fahrers oder dem Ermüdungsgrad des Fahrers die Steuereinrichtung dazu eingerichtet ist, eine Eigenschaft eines erzeugten Drehmoments nach Beendigung der Kraftstoffabschaltung in einem Verbrennungsmotor, der als Fahrantriebsquelle des Fahrzeugs dient, einzustellen,
wobei, wenn festgestellt wird, dass eine hohe Reaktionsfähigkeit der Fahrzeugsteuerung in Bezug auf die Fahrtätigkeit erforderlich ist, die Steuereinrichtung dazu eingerichtet ist, einen Erhöhungsbetrag pro Zeiteinheit des erzeugten Drehmoments nach Beendigung der Kraftstoffabschaltung zu erhöhen, und
wobei, wenn festgestellt wird, dass eine niedrige Reaktionsfähigkeit der Fahrzeugsteuerung in Bezug auf die Fahrtätigkeit erforderlich ist, die Steuereinrichtung dazu eingerichtet ist, einen Erhöhungsbetrag pro Zeiteinheit des erzeugten Drehmoments nach Beendigung der Kraftstoffabschaltung zu verringern.

17. Steuervorrichtung für ein Fahrzeug nach einem der Ansprüche 1 bis 10,
wobei entsprechend der Fahrneigung des Fahrers, dem Niveau der Fahrfertigkeit des Fahrers oder dem Ermüdungsgrad des Fahrers die Steuereinrichtung dazu eingerichtet ist, eine Eingriffszeit der durch ein VDIM-System durchgeführten Steuerung mittels Vehicle Dynamics Integrated Management, VDIM, einzustellen, um eine Antriebskraft des Fahrzeugs und einen Bremsöldruck zu steuern,
wobei die VDIM-Steuerung eine Differenz berechnet zwischen: einem Fahrbild des Fahrers, das basierend auf den Beträgen der Betätigung eines Gaspedals, einer Lenkung und einer Bremse erhalten wird, und einem Fahrzeugverhalten, das auf Informationen von verschiedenen Sensoren basiert, und die Antriebskraft des Fahrzeugs und den Bremsöldruck steuert, um die Differenz zu reduzieren;
wobei, wenn festgestellt wird, dass eine hohe Reaktionsfähigkeit der Fahrzeugsteuerung in Bezug auf die Fahrtätigkeit erforderlich ist, die Steuereinrichtung dazu eingerichtet ist, den Eingriffszeitpunkt der VDIM-Steuerung zu verzögern, und
wobei, wenn festgestellt wird, dass eine niedrige Reaktionsfähigkeit der Fahrzeugsteuerung in Bezug auf die Fahrtätigkeit erforderlich ist, die Steuereinrichtung dazu eingerichtet ist, den Eingriffszeitpunkt der VDIM-Steuerung vorzuverlegen.

18. Steuervorrichtung für ein Fahrzeug nach einem der Ansprüche 1 bis 10,
wobei entsprechend der Fahrneigung des Fahrers, dem Niveau der Fahrfertigkeit des Fahrers oder dem Ermüdungsgrad des Fahrers die Steuereinrichtung dazu eingerichtet ist, eine Dämpfungskraft einer in einer Aufhängungsvorrichtung des Fahrzeugs angeordneten Luftfederung einzustellen,
wobei, wenn festgestellt wird, dass eine hohe Reaktionsfähigkeit der Fahrzeugsteuerung in Bezug auf die Fahrtätigkeit erforderlich ist, die Steuereinrichtung dazu eingerichtet ist, die Dämpfungskraft der Luftfederung zu erhöhen, und
wobei, wenn festgestellt wird, dass eine niedrige Reaktionsfähigkeit der Fahrzeugsteuerung in Bezug auf die Fahrtätigkeit erforderlich ist, die Steuereinrichtung dazu eingerichtet ist, die Dämpfungskraft der Luftfederung zu verringern.

## Revendications

1. Dispositif de commande pour un véhicule, le dispositif de commande comportant une transmission manuelle (MT) et/ou un dispositif (6) d'embrayage, la transmission manuelle étant configurée pour sélectionner un étage parmi une pluralité d'étages de rapports par l'intermédiaire d'une manipulation de changement d'un conducteur, le dispositif d'embrayage étant configuré pour mettre en prise la transmission manuelle avec une source motrice et l'en détacher par l'intermédiaire d'une manipulation d'embrayage du conducteur,
le dispositif de commande comportant un moyen de commande servant à déterminer une préférence de conduite du conducteur, un niveau de compétence de conduite du conducteur, ou un degré de fatigue du conducteur d'après des informations de manipulation qui peuvent varier en fonction d'au moins une manipulation parmi la manipulation de changement et la manipulation d'embrayage du conducteur, et à régler de façon commandable une quantité de commande par rapport à une cible de commande du véhicule en fonction de la préférence de conduite déterminée, du niveau de compétence de conduite déterminé ou du degré de fatigue déterminé, **caractérisé en ce que** lesdites informations de manipulation comportent au moins une information parmi :
un taux de variation par unité de temps du régime de l'arbre d'entrée (IS) ;
le régime de l'arbre d'entrée ;
une ampleur de mouvement de manipulation par unité de temps du levier de changement (L) ;
un étage de rapport sélectionné par l'intermédiaire d'une manipulation du levier de changement ;
une période de commutation de l'étage de rapport par l'intermédiaire d'une manipulation du levier de changement ;
une amplitude de la charge de changement ;
un couple d'embrayage ;
une variation de vitesse dans la position de course d'embrayage ; et
une période avant qu'une course d'embrayage prédéterminée soit atteinte.

2. Dispositif de commande pour un véhicule selon la revendication 1,
le moyen de commande étant configuré pour déterminer la préférence de conduite du conducteur, le niveau de compétence de conduite du conducteur, ou le degré de fatigue du conducteur d'après un taux de variation par unité de temps du régime d'un arbre d'entrée de la transmission manuelle,
le dispositif de commande étant configuré, lorsque le taux de variation par unité de temps du régime de l'arbre d'entrée de la transmission manuelle est supérieur à une valeur prédéterminée, pour déterminer qu'une réactivité élevée de commande de véhicule est demandée par rapport à la manipulation de conduite, et le dispositif de commande étant configuré, lorsque le taux de variation par unité de temps du régime de l'arbre d'entrée de la transmission manuelle est inférieur à une valeur prédéterminée, pour déterminer qu'une faible réactivité de la commande de véhicule est demandée par rapport à la manipulation de conduite.

3. Dispositif de commande pour un véhicule selon la revendication 1,
le moyen de commande étant configuré pour déterminer la préférence de conduite du conducteur, le niveau de compétence de conduite du conducteur, ou le degré de fatigue du conducteur d'après le régime d'un arbre d'entrée de la transmission manuelle,
le dispositif de commande étant configuré, lorsque le régime de l'arbre d'entrée est supérieur à une valeur prédéterminée par rapport à une vitesse du véhicule, pour déterminer qu'une réactivité élevée de commande de véhicule est demandée par rapport à la manipulation de conduite, et
le dispositif de commande étant configuré, lorsque le régime de l'arbre d'entrée est inférieur à une valeur prédéterminée par rapport à la vitesse du véhicule, pour déterminer qu'une faible réactivité de la commande de véhicule est demandée par rapport à la manipulation de conduite.

4. Dispositif de commande pour un véhicule selon la revendication 1.
le moyen de commande étant configuré pour déterminer la préférence de conduite du conducteur, le niveau de compétence de conduite du conducteur, ou le degré de fatigue du conducteur d'après une ampleur de mouvement de manipulation par unité de temps d'un levier de changement actionné par le conducteur.
le dispositif de commande étant configuré, lorsque l'ampleur de mouvement de manipulation par unité de temps du levier de changement est supérieure à une valeur prédéterminée, pour déterminer qu'une réactivité élevée de commande de véhicule est demandée par rapport à la manipulation de conduite, et
le dispositif de commande étant configuré, lorsque l'ampleur de mouvement de manipulation par unité de temps du levier de changement est inférieure à une valeur prédéterminée, pour déterminer qu'une faible réactivité de la commande de véhicule est demandée par rapport à la manipulation de conduite.

5. Dispositif de commande pour un véhicule selon la revendication 1,
le moyen de commande étant configuré pour déterminer la préférence de conduite du conducteur, le niveau de compétence de conduite du conducteur, ou le degré de fatigue du conducteur d'après un étage de rapport sélectionné par l'intermédiaire de la manipulation de changement,
le dispositif de commande étant configuré, lorsque l'étage de rapport sélectionné est un étage de rapport bas prédéterminé par rapport à une vitesse du véhicule, pour déterminer qu'une réactivité élevée de commande de véhicule est demandée par rapport à la manipulation de conduite, et
le dispositif de commande étant configuré, lorsque l'étage de rapport sélectionné est un étage de rapport haut prédéterminé par rapport à la vitesse du véhicule, pour déterminer qu'une faible réactivité de la commande de véhicule est demandée par rapport à la manipulation de conduite.

6. Dispositif de commande pour un véhicule selon la revendication 1,
le moyen de commande étant configuré pour déterminer la préférence de conduite du conducteur, le niveau de compétence de conduite du conducteur, ou le degré de fatigue du conducteur d'après une période de commutation d'un étage de rapport dans la manipulation de changement,
le dispositif de commande étant configuré, lorsque la période de commutation de l'étage de rapport est plus courte qu'une période prédéterminée, pour déterminer qu'une réactivité élevée de commande de véhicule est demandée par rapport à la manipulation de conduite, et le dispositif de commande étant configuré, lorsque la période de commutation de l'étage de rapport est plus longue qu'un temps prédéterminé, pour déterminer qu'une faible réactivité de la commande de véhicule est demandée par rapport à la manipulation de conduite.

7. Dispositif de commande pour un véhicule selon la revendication 1,
le moyen de commande étant configuré pour déterminer la préférence de conduite du conducteur, le niveau de compétence de conduite du conducteur, ou le degré de fatigue du conducteur d'après l'amplitude d'une charge de changement,
le dispositif de commande étant configuré, lorsque la charge de changement est supérieure à une valeur prédéterminée, pour déterminer qu'une réactivité élevée de commande de véhicule est demandée par rapport à la manipulation de conduite, et
le dispositif de commande étant configuré, lorsque la charge de changement est inférieure à une valeur prédéterminée, pour déterminer qu'une faible réactivité de la commande de véhicule est demandée par rapport à la manipulation de conduite.

8. Dispositif de commande pour un véhicule selon la revendication 1,
le moyen de commande étant configuré pour déterminer la préférence de conduite du conducteur, le niveau de compétence de conduite du conducteur, ou le degré de fatigue du conducteur d'après un couple d'embrayage associé à la manipulation d'embrayage,
le dispositif de commande étant configuré, lorsque le couple d'embrayage est supérieur à une valeur prédéterminée par rapport à un couple du moteur, pour déterminer qu'une réactivité élevée de commande de véhicule est demandée par rapport à la manipulation de conduite, et
le dispositif de commande étant configuré, lorsque le couple d'embrayage est inférieur à une valeur prédéterminée par rapport au couple du moteur, pour déterminer qu'une faible réactivité de la commande de véhicule est demandée par rapport à la manipulation de conduite.

9. Dispositif de commande pour un véhicule selon la revendication 1,
le moyen de commande étant configuré pour déterminer la préférence de conduite du conducteur, le niveau de compétence de conduite du conducteur, ou le degré de fatigue du conducteur d'après une variation de vitesse dans une position de course d'embrayage associée à la manipulation d'embrayage,
le dispositif de commande étant configuré, lorsque la variation de vitesse dans la position de course d'embrayage est supérieure à une valeur prédéterminée, pour déterminer qu'une réactivité élevée de commande de véhicule est demandée par rapport à la manipulation de conduite, et
le dispositif de commande étant configuré, lorsque la variation de vitesse dans la position de course d'embrayage est inférieure à une valeur prédéterminée, pour déterminer qu'une faible réactivité de la commande de véhicule est demandée par rapport à la manipulation de conduite.

10. Dispositif de commande pour un véhicule selon la revendication 1,
le moyen de commande étant configuré pour déterminer la préférence de conduite du conducteur, le niveau de compétence de conduite du conducteur, ou le degré de fatigue du conducteur d'après une période avant qu'une course d'embrayage atteigne une quantité prédéterminée lors de la manipulation d'embrayage,
le dispositif de commande étant configuré, lorsque la période avant que la course d'embrayage atteigne la quantité prédéterminée est plus courte qu'une valeur prédéterminée, pour déterminer qu'une réactivité élevée de commande de véhicule est demandée par rapport à la manipulation de conduite et
le dispositif de commande étant configuré, lorsque la période avant que la course d'embrayage atteigne la quantité prédéterminée est plus longue qu'une valeur prédéterminée, pour déterminer qu'une faible réactivité de la commande de véhicule est demandée par rapport à la manipulation de conduite.

11. Dispositif de commande pour un véhicule selon l'une quelconque des revendications 1 à 10,
le moyen de commande étant configuré, en fonction de la préférence de conduite du conducteur, du niveau de compétence de conduite du conducteur, ou du degré de fatigue du conducteur, pour régler un facteur de lissage de la commande par rapport à la cible de commande du véhicule,
le moyen de commande étant configuré, lorsqu'une détermination est effectuée selon laquelle une réactivité élevée de commande de véhicule est demandée par rapport à la manipulation de conduite, pour fixer le facteur de lissage de la commande à un niveau bas de façon à fixer la quantité de commande à un niveau élevé, et
le moyen de commande étant configuré, lorsqu'une détermination est effectuée selon laquelle une faible réactivité de la commande de véhicule est demandée par rapport à la manipulation de conduite, pour fixer le facteur de lissage de la commande à un niveau élevé de façon à fixer la quantité de commande à un niveau bas.

12. Dispositif de commande pour un véhicule selon l'une quelconque des revendications 1 à 10,
le moyen de commande étant configuré, en fonction de la préférence de conduite du conducteur, du niveau de compétence de conduite du conducteur, ou du degré de fatigue du conducteur, pour régler une propriété de degré d'ouverture d'un volet des gaz par rapport à une quantité d'abaissement d'un accélérateur par le conducteur,
le moyen de commande étant configuré, lorsqu'une détermination est effectuée selon laquelle une réactivité élevée de commande de véhicule est demandée par rapport à la manipulation de conduite, pour augmenter un degré d'ouverture du volet des gaz par rapport à la quantité d'abaissement de l'accélérateur par le conducteur, et
le moyen de commande étant configuré, lorsqu'une détermination est effectuée selon laquelle une faible réactivité de la commande de véhicule est demandée par rapport à la manipulation de conduite, pour diminuer le degré d'ouverture du volet des gaz par rapport à la quantité d'abaissement de l'accélérateur par le conducteur.

13. Dispositif de commande pour un véhicule selon l'une quelconque des revendications 1 à 10,
le moyen de commande étant configuré, en fonction de la préférence de conduite du conducteur, du niveau de compétence de conduite du conducteur, ou du degré de fatigue du conducteur, pour régler une propriété de degré d'ouverture d'un volet des gaz à un instant d'enfoncement associé à une manipulation d'un accélérateur par le conducteur,
le moyen de commande étant configuré, lorsqu'une détermination est effectuée selon laquelle une réactivité élevée de commande de véhicule est demandée par rapport à la manipulation de conduite, pour augmenter un taux de variation par unité de temps d'un degré d'ouverture du volet des gaz à l'instant d'enfoncement, et
le moyen de commande étant configuré, lorsqu'une détermination est effectuée selon laquelle une faible réactivité de la commande de véhicule est demandée par rapport à la manipulation de conduite, pour diminuer le taux de variation par unité de temps du degré d'ouverture du volet des gaz à l'instant d'enfoncement.

14. Dispositif de commande pour un véhicule selon l'une quelconque des revendications 1 à 10,
le moyen de commande étant configuré, en fonction de la préférence de conduite du conducteur, du niveau de compétence de conduite du conducteur, ou du degré de fatigue du conducteur, pour régler une propriété de degré d'ouverture d'un volet des gaz à un instant de relèvement associé à une manipulation d'un accélérateur par le conducteur,
le moyen de commande étant configuré, lorsqu'une détermination est effectuée selon laquelle une réactivité élevée de commande de véhicule est demandée par rapport à la manipulation de conduite, pour augmenter un taux de variation par unité de temps d'un degré d'ouverture du volet des gaz à l'instant de relèvement, et
le moyen de commande étant configuré, lorsqu'une détermination est effectuée selon laquelle une faible réactivité de la commande de véhicule est demandée par rapport à la manipulation de conduite, pour diminuer le taux de variation par unité de temps du degré d'ouverture du volet des gaz à l'instant de relèvement.

15. Dispositif de commande pour un véhicule selon l'une quelconque des revendications 1 à 10,
le moyen de commande étant configuré, en fonction de la préférence de conduite du conducteur, du niveau de compétence de conduite du conducteur, ou du degré de fatigue du conducteur, pour régler une propriété d'un couple généré à l'instant d'une coupure de carburant dans un moteur (1) à combustion interne servant de source motrice de déplacement du véhicule,
le moyen de commande étant configuré, lorsqu'une détermination est effectuée selon laquelle une réactivité élevée de commande de véhicule est demandée par rapport à la manipulation de conduite, pour augmenter une quantité de réduction par unité de temps du couple généré à l'instant de la coupure de carburant, et
le moyen de commande étant configuré, lorsqu'une détermination est effectuée selon laquelle une faible réactivité de la commande de véhicule est demandée par rapport à la manipulation de conduite, pour diminuer la quantité de réduction par unité de temps du couple généré à l'instant de la coupure de carburant.

16. Dispositif de commande pour un véhicule selon l'une quelconque des revendications 1 à 10,
le moyen de commande étant configuré, en fonction de la préférence de conduite du conducteur, du niveau de compétence de conduite du conducteur, ou du degré de fatigue du conducteur, pour régler une propriété d'un couple généré après la levée d'une coupure de carburant dans un moteur à combustion interne servant de source motrice de déplacement du véhicule,
le moyen de commande étant configuré, lorsqu'une détermination est effectuée selon laquelle une réactivité élevée de commande de véhicule est demandée par rapport à la manipulation de conduite, pour augmenter une quantité d'augmentation par unité de temps du couple généré après la levée de la coupure de carburant, et
le moyen de commande étant configuré, lorsqu'une détermination est effectuée selon laquelle une faible réactivité de la commande de véhicule est demandée par rapport à la manipulation de conduite, pour diminuer la quantité d'augmentation par unité de temps du couple généré après la levée de la coupure de carburant.

17. Dispositif de commande pour un véhicule selon l'une quelconque des revendications 1 à 10,
le moyen de commande étant configuré, en fonction de la préférence de conduite du conducteur, du niveau de compétence de conduite du conducteur, ou du degré de fatigue du conducteur, pour régler un minutage d'intervention d'une commande de Gestion intégrée de dynamique de véhicule, VDIM, réalisée par un système de VDIM pour réguler une force motrice du véhicule et une pression d'huile de freinage,
la commande de VDIM calculant une différence entre : une image de circulation du conducteur obtenue d'après les quantités de manipulation d'un accélérateur, d'une direction et d'un frein ; et un comportement de véhicule basé sur des informations provenant de divers capteurs, et régulant la force motrice du véhicule et la pression d'huile de freinage pour réduire la différence ;
le moyen de commande étant configuré, lorsqu'une détermination est effectuée selon laquelle une réactivité élevée de commande de véhicule est demandée par rapport à la manipulation de conduite, pour retarder le minutage d'intervention de la commande de VDIM, et
le moyen de commande étant configuré, lorsqu'une détermination est effectuée selon laquelle une faible réactivité de la commande de véhicule est demandée par rapport à la manipulation de conduite, pour avancer le minutage d'intervention de la commande de VDIM.

18. Dispositif de commande pour un véhicule selon l'une quelconque des revendications 1 à 10,
le moyen de commande étant configuré, en fonction de la préférence de conduite du conducteur, du niveau de compétence de conduite du conducteur, ou du degré de fatigue du conducteur, pour régler une force d'amortissement d'une suspension pneumatique disposée dans un dispositif de suspension du véhicule,
le moyen de commande étant configuré, lorsqu'une détermination est effectuée selon laquelle une réactivité élevée de commande de véhicule est demandée par rapport à la manipulation de conduite, pour augmenter la force d'amortissement de la suspension pneumatique, et
le moyen de commande étant configuré, lorsqu'une détermination est effectuée selon laquelle une faible réactivité de la commande de véhicule est demandée par rapport à la manipulation de conduite, pour diminuer la force d'amortissement de la suspension pneumatique.
